# EUROPÄISCHE PATENTSCHRIFT

(11) **EP 0 775 651 B1**
(45) Veröffentlichungstag und Bekanntmachung des Hinweises auf die Patenterteilung: **21.02.2001**
(21) Anmeldenummer: 96117838.1
(22) Anmeldetag: 07.11.1996
(51) Int. Cl.: B65G 51/26

(54) **Rohrpostanlage**
Pneumatic tube conveyor system
Transporteur à tubes pneumatiques

(30) Priorität: 21.11.1995 DE 19543416
(43) Veröffentlichungstag der Anmeldung: 28.05.1997
(73) Patentinhaber: Pfaff AQS GmbH Automatische Qualitätskontrollsysteme, 42289 Wuppertal (DE)
(72) Erfinder: Berghöfer, Stefan, 42327 Wuppertal (DE); Schmidt, Bernd, 42283 Wuppertal (DE)
(74) Vertreter: Patentanwälte Dr. Solf & Zapf

(56) Entgegenhaltungen:
- EP-A- 0 442 118
- EP-A- 0 508 049
- DE-A- 2 722 865
- DE-A- 4 139 396

## Beschreibung

Die Erfindung betrifft eine Rohrpostanlage mit mindestens zwei Rohrpostendstationen, die durch ein Fahrrohr miteinander in Verbindung stehen, in dem eine Rohrpostbüchse zwischen den beiden Rohrpostendstationen mittels eines pneumatischen Transportantriebssystems im Wendebetrieb hin- und herförderbar ist, wobei die eine Endstation zu Probenbefüllungsoperationen und die andere zu Probenentnahmeoperationen vorgesehen sind und jeweils eine Steuerungs- und Versorgungseinheit sowie eine Arbeitseinheit besitzen, in der neben einer stationären Position -Empfangen/Senden- im wesentlichen zwei weitere stationäre Positionen -Öffnen/Schließen- und -Füllen/ Entleeren- vorhanden sind, wobei die Positionen auf einem Kreisbogen angeordnet sind, und die eine Dreheinheit zur kreisbogengleichartigen Verschwenkung der Rohrpostbüchse zu den drei Positionen enthält.

Die Erfindung ist auf eine Rohrpostanlage vorzugsweise in Schwerindustriebetrieben, insbesondere Zementwerken, Stahlwerken od.dgl. gerichtet, in denen materielle, insbesondere pulvrige, körnige und andere kleinstrukturierte Zwischen- und Endprodukte in Probenform automatisch schnell analysiert und sicher geprüft werden können.

Es ist eine Rohrpostanlage mit einer Rohrpostendstation aus der DE-PS 21 39 593 bekannt. In der Endstation befindet sich eine Kammer in Form eines aus zwei Halbschalen, einer Oberhalb- und einer Unterhalbschale, gebildeten horizontal angeordneten Rohrstücks von etwa der Länge einer Rohrpostbüchse, wobei die Unterhalbschale zum Öffnen der Kammer, d.h. zum vorzugsweisen manuellen Eingeben und Entnehmen der Rohrpostbüchse von der Oberhalbschale entfernbar ist. Die eine Längskante der Oberhalbschale ist mit einer ortsfest am Endstationsgehäuse gelagerten motorgetriebenen Schwenkwelle drehbar verbunden. Auch die andere Längskante ist mit der entsprechenden Längskante der Unterhalbschale drehbar verbunden, wobei an der Unterhalbschale ein sich nach unten erstreckender Führungsarm angeordnet ist, dessen unteres Ende mittels Führungsrändern in ortsfesten Kanälen geführt ist.

Um den Transport der Rohrpostbüchse zu ermöglichen, ist es notwendig, die Kammer zwischen der Ober- und der Unterhalbschale luftdicht abzuschließen. Dabei ist eine zusätzliche Abdichtung zwischen der Kammer und dem Fahrrohr vorgesehen. Die Kammer ist zu beiden Seiten angeflanscht mit beidseitigen Dichtungsabschnitten.

Ein Problem der bekannten Rohrpostendstation besteht darin, daß die Ausbildung der abgedichteten Kammer mit der mit dem Schwenkarm gekoppelten Gehäusetür material- und kostenaufwendig ist.

Ein weiteres Problem besteht darin, daß bei der Probenzuführung bzw. zur Probenbefüllung der Rohrpostbüchse die Gehäusetür geöffnet werden muß. Bei Transport der Rohrpostbüchse ist es erforderlich, die Kammer entsprechend der Transportrichtung der Rohrpostbüchse pneumatisch unter Überdruck bzw. unter Unterdruck zu setzen. Der Vorgang der Rohrpostbüchsenentnahme bzw. -befüllung ist sehr zeitaufwendig und verzögert den Transport der Rohrpostbüchse zur Laborrohrpostendstation.

Es ist eine gattungsgemäße Rohrpostanlage für Feingutproben aus der DE-OS 27 22 865 bekannt, die mindestens eine Rohrpostendstation mit einer Arbeitseinheit zur Durchführung von Operationen: Empfangen, Öffnen, Füllen, Schließen und Absenden einer Rohrpostbüchse aufweist sowie eine Rohrpostendstation mit einer Arbeitseinheit zur Durchführung der Operationen: Empfangen, Öffnen, Entleeren, Schließen und Zurückfördern der Rohrpostbüchse zur erstgenannten Rohrpostendstation. Beide Rohrpostendstationen sind durch ein Fahrrohr miteinander verbunden, in dem mittels eines einzigen, auf Saug- und Druckbetrieb umschaltbares Gebläses der Transport der Rohrpostbüchse erfolgt. Die jeweilige Arbeitseinheit enthält zur selbsttätigen Durchführung der Operationen eine Dreheinheit mit einem über drei stationäre Positionen hin- und herschwenkbaren Schwenkarm, der eine Büchsenzange aufweist, in der die Rohrpostbüchse aufgenommen wird. In der Dreheinheit ist dem Schwenkarm ein Getriebemotor mit einem Malteserkreuzgetriebe zugeordnet, wobei für jede stationäre Position Näherungssensoren, vorzugsweise Näherungsinitiatoren als Positionsrückmelder an eine Steuerungs- und Versorgungseinheit vorgesehen sind. Sowohl am Ende des Fahrrohres als auch an der durch ein Probenführungsrohr gekennzeichneten Füllposition sind pneumatisch heb- und senkbare Rohrleitungsdichtungen für ein luft- bzw. staubdichtes Abschließen der Rohre und der Büchsenzange vorgesehen.

Ein Problem dieser Arbeitseinheit besteht darin, daß das Fahrrohr in der Arbeitseinheit weitergeführt ist und damit sowohl oberhalb als auch unterhalb des Fahrrohres sowie am Probenführungsrohr auch komplizierte und aufwendige Rohrabdichtungsvorrichtungen angebracht sind, die bei Einschwenken der Dreheinheit in die beiden stationären Positionen die Büchsenzange im Schwenkarm, aber nicht unmittelbar die Rohrpostbüchse abdichten, wobei die Rohrabdichtungsvorrichtungen jeweils ein mit Druckluft betätigbares Kolbenzylindersystem, das aus mindestens zwei relativ zueinander gleitbeweglichen Teilen besteht, darstellen. Dieser hohe materielle und energetische Aufwand ist notwendig, um sowohl den Schwenkarm gegenüber dem Fahrrohr beidseitig luftdicht abzuschließen als auch zumindest ein staubfreies Abdichten in der Füllposition zu erreichen. Die pneumatische Betätigung der Rohrabdichtungsvorrichtungen erfordert zeitlichen Aufwand, der Verzögerungen im gesamten Ablauf hervorruft.

Der Erfindung liegt die Aufgabe zugrunde, eine Rohrpostanlage mit einer Rohrpostendstation anzugeben, die eine baulich geeignete Arbeitseinheit enthält, um Material und Aufwand zum Abdichten der Rohre in den stationären Positionen zur Behandlung der Rohrpostbüchse einzusparen und um Verzögerungen bei der Rohrpostbüchsenbefüllung weitgehend zu vermeiden. Es besteht desweiteren die Aufgabe, die energetischen Verluste im pneumatischen Transportantriebssystem der Rohrpostanlage wesentlich zu verringern.

Gelöst wird die Aufgabe durch die Merkmale des Anspruchs 1.

Die erfindungsgemäße Rohrpostendstation ist vorzugsweise automatisch und unter wesentlich günstigeren Sicherheitsbedingungen betreibbar, da alle drei stationäre Positionen verschwenkbar ansteuerbar sind und die Rohrpostbüchse senkrecht zur Verschwenkungsebene, vorzugsweise durch pneumatische Kolbenzylindersysteme operationsunterstützend bedienbar ist.

Die Erfindung eröffnet auch die Möglichkeit, daß das Fahrrohr in der Arbeitseinheit endet und somit das pneumatische Transportantriebssystem nur auf das bis zu der Arbeitseinheit einer Endstation führende Fahrrohr beschränkt ist. Durch die separaten, einseitig angeordneten Kolbenzylindersysteme in der Arbeitseinheit werden komplizierte Rohrabdichtungsvorrichtungen eingespart.

Vorteilhafte Weiterbildungen und Ausgestaltungen der Erfindung werden in den Unteransprüchen angegeben.

Die Erfindung wird anhand eines Ausführungsbeispiels mittels mehrerer Zeichnungen näher erläutert.

Es zeigen:
- Fig. 1: eine Vorderansicht auf eine erfindungsgemäße Rohrpostendstation zur Befüllung einer Rohrpostbüchse,
- Fig. 2: eine Draufsicht auf die erfindungsgemäße Rohrpostendstation mit zugehöriger Rohranordnung nach Fig. 1,
- Fig. 3: einen Schnitt längs der Linie A-A im Rohranschlußblock der Rohrpostendstation nach Fig. 1,
- Fig. 4: einen Schnitt längs der Linie B-B im Befüllungsblock der Rohrpostendstation nach Fig. 1,
- Fig. 5: eine Seitenansicht einer Rohrpostbüchse,
- Fig. 6: eine Seitenansicht der erfindungsgemäßen Rohrpostendstation nach Fig. 1,
- Fig. 7: eine schematische Darstellung der Rohrpostbüchse nach Fig. 5 in einem Fahrrohrstück in der Deckelabzugsvorrichtung und

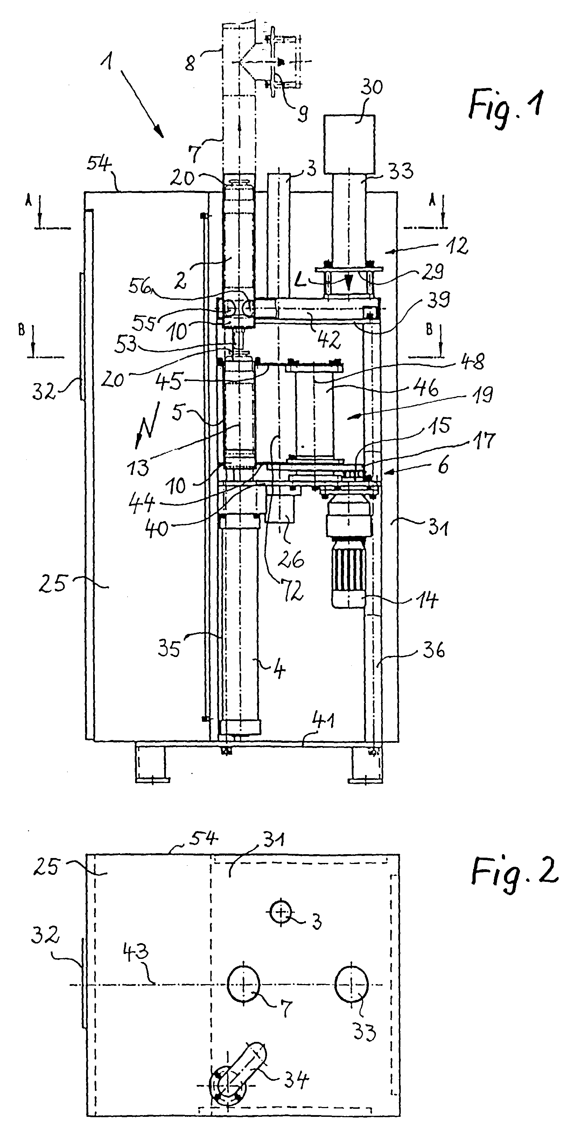

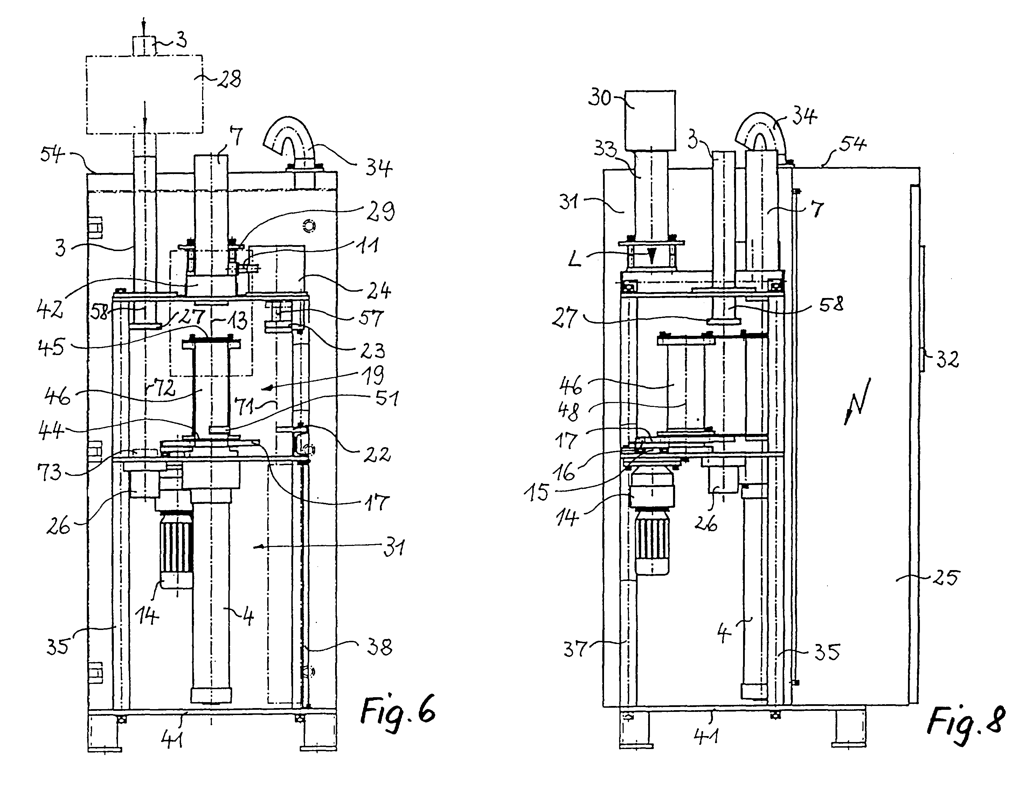

- Fig. 6: eine Hinteransicht der erfindungsgemäßen Rohrpostendstation nach Fig. 1.

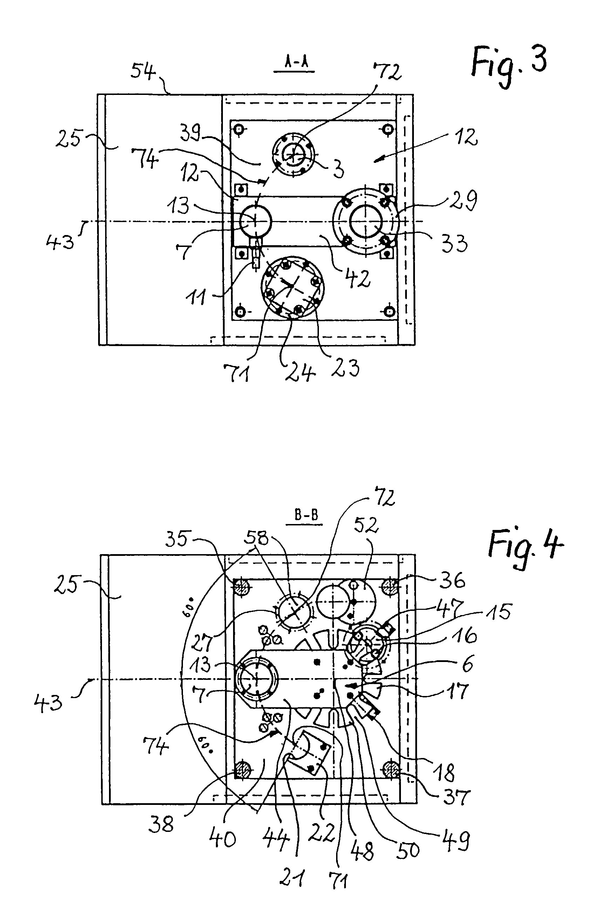

Die Fig. 1,3,4 sind im unmittelbaren Zusammenhang zu sehen. In Fig. 1 ist eine Vorderansicht auf eine Rohrpostendstation 1 einer erfindungsgemäßen Rohrpostanlage dargestellt. Eine Rohrpostanlage enthält in der Regel mindestens zwei Rohrpostendstationen. Die beiden Rohrpostendstationen sind durch ein Fahrrohr 7 miteinander verbunden, in dem eine Rohrpostbüchse 2 zwischen den beiden Rohrpostendstationen mittels eines pneumatischen Transportantriebssystems im Wendebetrieb hin- und herförderbar ist, wobei die eine Endstation zu Probenbefüllungsoperationen und die andere zu Probenentnahmeoperationen vorgesehen sind und jeweils eine Steuerungs- und Versorgungseinheit 25 sowie eine Arbeitseinheit 31 besitzen. In den Fig. 3,4 ist dargestellt, daß die Arbeitseinheit 31 eine stationäre Position 13 -Empfangen/Senden- am endenden Fahrrohr 7 und zwei weitere stationäre Positionen 71 -Öffnen/Schließen- an einem endenden Probenführungsrohr 3 und 72 -Füllen/Entleeren- an einer Deckelabzugsvorrichtung 23 aufweist, wobei die Positionen 13,71,72 auf einem Kreisbogen 74 angeordnet sind, und desweiteren eine Dreheinheit 6 zur kreisbogengleichartigen Verschwenkung der Rohrpostbüchse 2 an den jeweiligen Ort der drei stationären Positionen 13,71,72 enthält.

Die erfindungsgemäße Rohrpostendstation 1 zur Probenbefüllung stellt sowohl eine Empfangsstation für eine leer ankommende Rohrpostbüchse 2 als auch eine Sendestation für die mit Probenmaterial gefüllte, abzusendende Rohrpostbüchse 2 dar.

Dem Ende des Fahrrohres 7 ist ein Kolbenzylindersystem 10,4,53 mit einem Verschlußaußenkolben 10 in einem axialen Abstand entfernt gegenüberliegend angeordnet, in dem das separate, exzentrisch in der Dreheinheit 6 befestigte Fahrrohrstück 5 derart in der stationären Position 13 -Empfangen/Senden- vorhanden ist, daß der entsprechend bemessene Verschlußaußenkolben 10 durch das Fahrrohrstück 5 hindurch bis zum Fahrrohr 7 innenangepaßt bewegbar und zur rohrinternen axialen Verschiebung der Rohrpostbüchse 2 gesteuert betätigbar ist (Fig. 1).

Die Arbeitseinheit 31 und die Steuerungs- und Versorgungseinheit 25 sind von einem gemeinsamen Gehäuse 54, das vorzugsweise quaderförmig, schrankartig ausgebildet ist, umgeben.

Die Arbeitseinheit 31 enthält im Inneren eine auf vier vorzugsweise runde Säulen 35,36,37,38 (Fig. 4) befindliche obere, horizontal gerichtete Rohrhalterungsplatte 39 und eine untere, etwa mittig eingepaßte, ebenfalls horizontale Arbeitsplatte 40. Die vier Säulen 35,36,37,38 sind vorzugsweise am Bodenblech 41 der Arbeitseinheit 31 befestigt. Die Rohrhalterungsplatte 39 und die Arbeitsplatte 40 sind vorzugsweise als rechteckige Platten ausgebildet, die weitgehend die gleiche Form und Fläche aufweisen.

Die Rohrhalterungsplatte 39 ist die Basis des Rohranschlußblokkes 12. Die Arbeitsplatte 40 ist Teil des Befüllungsblockes 19.

Der Rohranschlußblock 12 besteht hauptsächlich aus drei senkrecht stehenden Rohren, die zum Teil an der Rohrhalterungsplatte 39 befestigt, vorzugsweise angeflanscht sind und zum Teil durch die Rohrhalterungsplatte 39 hindurchgehen sowie durch entsprechende Stutzen weitergeführt sind: Erstens aus dem Fahrrohr 7, in dem die Rohrpostbüchse 2 im Wendebetrieb transportierbar ist, zweitens aus dem Probenführungsrohr 3 und drittens aus einem Luftrohr 33, in dem das für den Transport der Rohrpostbüchse 2 im Fahrrohr 7 notwendige Antriebsmedium, vorzugsweise Druckluft bereitgestellt wird.

In Fig. 2 ist eine Draufsicht auf das Gehäuse 54 dargestellt, in das die drei Rohre 3,7,33 von oben und ein Kabelanschluß 34 aus der Steuerungs- und Versorgungseinheit 25 in die Arbeitseinheit 31 führen.

In den Fig. 1 und 3 ist gezeigt, daß das Luftrohr 33 über einen Verbindungskanal 42 mit dem Endbereich des Fahrrohres 7 verbunden ist, wobei der Verbindungskanal 42 zum Fahrrohr 7 mindestens eine Luftdurchgangsöffnung 55 bzw. 56 aufweist. Das Luftrohr 33 ist an ein Gebläse 30 angeschlossen und durch ein Rückschlagventil, vorzugsweise eine federgestützte Rückschlagklappe 29 ververschließbar. Die angegebene Pfeilrichtung L zeigt die Strömungsrichtung der Transportluft vom Gebläse 30 aus an.

Das Fahrrohr 7 endet unterhalb der Rohrhalterungsplatte 39. Zwischen der Rohrhalterungsplatte 39 und der Arbeitsplatte 40 befindet sich das Fahrrohrstück 5, das im wesentlichen endseitig beabstandet übereinen oberen und einen unteren, vorzugsweise plattenförmigen Schwenkarm 44,45 mit der Arbeitsplatte 40 in Verbindung steht und vorzugsweise den gleichen Innendurchmesser wie das Fahrrohr 7 besitzt.

Das Kolbenzylindersystem 10,4,53 in der stationären Position 13 -Empfangen/Senden- weist einen Fahrrohrzylinder 4 auf, der an der horizontalen Arbeitsplatte 40 nach unten in Richtung des Bodens 41 angeflanscht ist, dessen innerer Kolben (nicht eingezeichnet) über eine Kolbenstange 53 mit einem Verschlußaußenkolben 10 fest verbunden ist, der durch das Fahrrohrstück 5 bis in den Endbereich des Fahrrohrs 7 ausfahrbar ist, wenn das Fahrrohr 7, das Fahrrohrstück 5 und der Fahrrohrzylinder 4 achsenparallel fluchtend in der einstellbaren, stationären Position angeordnet sind. Dabei sind das Fahrrohr 7 und der Fahrrohrzylinder 4 zueinander beabstandet befestigt, während das Fahrrohrstück 5 in dem vorgegebenen Abstand einstellbar plazierbar ist und aus der achsenparallelen stationären Position 13 -Empfangen/Senden- jeweils vorübergehend in die stationäre Position 71 -Öffnen/Schließen- und in die Position 72 -Füllen/Entleeren- zur Befüllung der Rohrpostbüchse 2 auf dem Kreisbogen 74 verschwenkbar ist.

Vorzugsweise ist außerhalb der Rohrpostendstation 1 in das Fahrrohr 7 ein T-förmiges Rohrstück 8 eingebaut, das mit einer dem T-Längsbalken zugeordneten, federbelasteten Rückschlagklappe 9 versehen ist.

In den Fig. 3 und 6 ist gezeigt, daß ein Näherungssensor 11, insbesondere ein Näherungsschalter am Fahrrohr 7 angeordnet ist, der die Stellung der Rohrpostbüchse 2 im Fahrrohr meldet, wodurch das Gebläse 30 je nach Art des Wendebetriebs in einen Saugluft- oder Drucklufterzeugungszustand einschaltbar oder überhaupt abschaltbar ist.

In Fig. 4 ist ein horizontaler Schnitt B-B in Draufsicht quer zum Befüllungsblock 19 gezeigt. Zum Befüllungsblock 19 gehört im wesentlichen die Dreheinheit 6, deren zentrale Drehachse 48 senkrecht gerichtet und exzentrisch auf einer der Mittellinien 43 der Arbeitsplatte 40 liegt. Die in der Arbeitsplatte 40 drehbar gelagerte Dreheinheit 6 ist durch einen unterhalb der Arbeitsplatte 40 befestigten Elektromotor 14 durchgreifend verschwenkbar. Die Dreheinheit 6 besitzt auch einen vom Elektromotor 14 bewegbaren, drehbar gelagerten Schaltstern 17 und zwei parallel gerichtete, voneinander beabstandete Schwenkarme 44 und 45, die jeweils an ihrem drehpunktbezogenen Endbereich drehfest miteinander verbunden sind. Die beiden übereinander angeordneten Schwenkarme 44,45 sind durch ein geflanschtes Rohrteil 46 voneinander fest beabstandet, wobei die senkrechte Achse des Rohrteils 46 die Drehachse 48 der Dreheinheit 6 darstellt.

Das Fahrrohr 7 endet senkrecht in der Rohrpostendstation 1 im Befüllungsblock 19.

Am freien Endbereich der Schwenkarme 44,45 ist das Fahrrohrstück 5 vorzugsweise jeweils unter- und oberendig fest gehaltert. Zur Dreheinheit 6 gehört auch eine neben dem Schaltstern 17 drehbar gelagerte Schaltscheibe 15, die zwei axial gerichtete, auf ihrer Durchmesserlinie randbereichsseitig beabstandete Kurvenrollen 16 besitzt, von denen immer mindestens eine in eine der zwölf randseitigen, radialen Einbuchtungen 49 des Schaltsterns 17 eingreift. Insbesondere ist der Schaltstern 17 eine Drehscheibe mit vorzugsweise zwölf radial zur Drehachse 48 gerichteten, schlitzartigen Einbuchtungen 49, die zur Drehachse 48 hin konvex gerundet sind. Der Schaltstern 17 besitzt somit zwölf Strahlelemente 50, wobei in zwei benachbarten, durch ein Strahlelement 50 getrennte Einbuchtungen 49 jeweils eine abstehende Kurvenrolle 16 der Schaltscheibe 15 formschlüssig eingreift. Das bedeutet, daß am Schaltstern 17 zwischen zwei benachbarten Einbuchtungen 49 jeweils ein Strahlelement 50 vorhanden ist. Das bedeutet aber auch gleichzeitig, daß bei einer Verdrehung des Schaltsterns 17 um zwei Strahlelemente 50 eine Winkeldrehung von 60° erreichbar ist, was durch das vorgegebene Schaltsterngetriebe exakt erreichbar ist. Bei einer Umdrehung der Schaltscheibe 15 wird der Schaltstern 17 um jeweils zwei Strahlelemente 50, d.h. zweimal um einen Winkel von 30° verdreht.

Die Längsmittelachsen des Fahrrohrs 7, des Probenführungsrohres 3 und von Halbrundgabeln 21,70 der Deckelabzugsvorrichtung 23 liegen senkrecht zur Arbeitsplatte 40 auf einem Kreisbogen 74, dessen Mittelpunkt sich auf der Drehachse 48 der Dreheinheit 6 befindet, deren Fahrrohrstück 5 eine Längsmittelachse aufweist, die sich bei bewegtem Fahrrohrstück 5 auf dem gleichen Kreisbogen 74 bewegt. In den Fig. 3,4,6 zeigen die Bezugszeichen 13,71,72 der stationären Positionen der Rohrbüchse 2 gleichzeitig die Längsmittelachsen an, da beide weitgehend bei der Durchführung der jeweils zugeordneten Operationen übereinstimmen.

Auf der Arbeitsplatte 40 sind zwei Näherungssensoren 18 und 47, die als Näherungsinitiatoren ausgebildet sind, befestigt. Der Näherungssensor 18 ist im Bereich der Strahlelemente 50 zwischen dem Schaltstern 17 und der Arbeitsplatte 40 angeordnet und gibt eine Rückmeldung über die Stellung der Strahlelemente 50. Der andere Näherungssensor 47 ist im Bereich an der Schaltscheibe 15 plaziert, um vorzugsweise deren momentane Drehstellung rückzumelden.

Die Näherungssenoren 18,47 teilen somit der Steuerungseinheit 25 die Schaltstellung der Strahlelemente 50 des Schaltsterns 17 mit. Angezeigt kann an einem Bedienfeld 32 der Steuerungs- und Versorgungseinheit 25 neben anderen anfallenden Meßdaten die jeweils um einen Winkel von 30° bzw. von einem Mehrfachen von 30° veränderbare Schaltstellung des Schaltsterns 17 und somit der Ort des Fahrrohrstückes 5 mit der Rohrpostbüchse 2.

Das zwischen den beiden Schwenkarmen 44,45 an deren freien Endbereich fest angeordnete Fahrrohrstück 5 kann somit durch die Dreheinheit 6 passend genau achsenparallel unter das Fahrrohr 7 und über den Fahrrohrzylinder 4 in der stationären Position 13 angeordnet werden, so daß eine axiale Bewegung des Verschlußaußenkolbens 10 des Fahrrohrzylinders 4 bis in den Endbereich des Fahrrohrs 7 möglich ist.

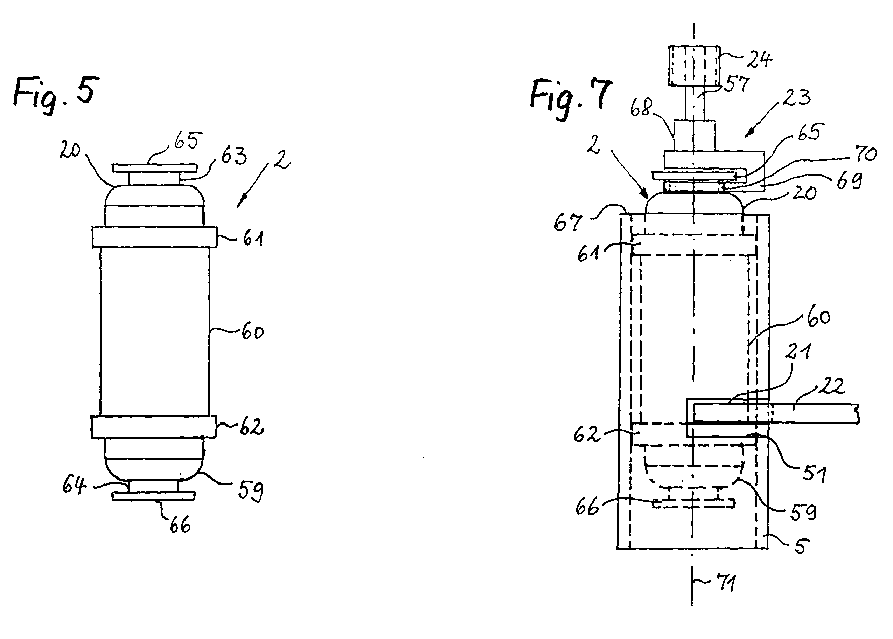

In Fig. 5 ist in einer Seitenansicht die Rohrpostbüchse 2 schematisch dargestellt. Da die Rohrpostbüchse 2 im Wendebetrieb pneumatisch transportiert wird, kann sie deckel- und bodenseitig vorzugsweise baulich gleichartig ausgeführt sein. Die Rohrpostbüchse 2 besteht im wesentlichen aus einem Deckel 20, einem hohlzylindrischen Mittelkörper 60 und einem Boden 59. Der Deckel 20 und der Boden 59 der Rohrpostbüchse 2 können vorzugsweise ihre Zuordnungen in der Laborrohrpostendstation wechseln, wobei dann der Deckel 20 und der Boden 59 vorzugsweise gleichförmig ausgebildet und unterhalb einer Dekkelplatte 65 bzw. oberhalb einer Bodenplatte 66 jeweils eine Radialverjüngung 63 bzw. 64 zum Untergreifen besitzen. Der Mittelkörper 60 weist zum Boden- bzw. im Deckelbereich gerichtet voneinander beabstandete Manschetten 61,62 auf, die ringförmig ausgebildet sind und sich bei Betätigung der Rohrpostbüchse 2 an das Fahrrohr 7 bzw. Fahrrohrstück 5 derart anschmiegen, daß bei geringem Spiel zwischen den Manschetten 61,62 und dem Innendurchmesser des Fahrrohres 7 sowie entsprechender Saug- bzw. Druckluft seitens des Gebläses 30 die Rohrpostbüchse 2 mit hoher Geschwindigkeit im Fahrrohr 7 bewegbar ist.

Der Deckel 20 und der Boden 59 der Rohrpostbüchse 2 sind damit vorzugsweise vom Mittelkörper 60 abziehbar und somit bei paßgenauer Annäherung wieder auf- bzw. einsetzbar. Die Bereiche über der Deckelmanschette 61 und unter der Bodenmanschette 62 sind zweckmäßigerweise durchmessermäßig kleiner bemessen, um im Saug- bzw. Druckluftbetrieb an den Manschetten 62 bzw. 61 je nach Transportrichtung die notwendigen Schubkräfte zu erzeugen.

Bei entsprechender Ausgestaltung der Laborrohrpostendstation kann der Boden 59 auch mit dem Mittelkörper 60 fest verbunden sein und somit eine andere Form als der relativ zum Mittelkörper 60 verschiebbare Deckel 20 aufweisen.

Aus der Steuerungs- und Versorgungseinheit 25 führt ein Kabelanschluß 34, der insbesondere elektrische Versorgungsleitungen, Signalleitungen, eventuell Luftdruckleitungen, falls ein Gebläse in der Versorgungseinheit 25 untergebracht ist, enthält. Die Versorgungsleitungen sind z.B. zum Elektromotor geführt, die Signalleitungen sind an Näherungssensoren 11,18,47 angeschlossen.

In Fig. 6 ist eine weitere Seitenansicht dargestellt, in der die Deckelabzugsvorrichtung 23 der Rohrpostbüchse 2 als eine weitere stationäre Position 71 gezeigt ist. Die Deckelabzugsvorrichtung 23 besteht im wesentlichen aus einem Büchsenhalter 22, der vorzugsweise an der Arbeitsplatte 40 befestigt ist, und aus einem dem Büchsenhalter 22 senkrecht beabstandet gegenüberliegenden Deckelabzugszylinder 24 mit vorgesehenem innerem Kolben und einem äußeren Probenhalterkolben 68, wobei der Deckelabzugszylinder 24 und der Büchsenhalter 22 um einen Winkel von 60° zum Fahrrohr 7 entgegen dem Uhrzeigersinn und um einen Winkel von 120° entgegen dem Uhrzeigersinn zum Probenführungsrohr 3 angeordnet ist (in Fig. 4). An den drei stationären Positionen 13,71,72 in Fig. 6 ist in rohrpostbüchsenaxialer Richtung jeweils ein fest angeordnetes Kolbenzylindersystem 10,4,53;68,24,57;73,26 mit einem steuerbaren, operationsgemäß geformten Außenkolben 10;68;73 vorgesehen, der in axialer Richtung im wesentlichen an der Rohrpostbüchse 2 unterstützend tätig ist, die zur Durchführung vorgegebener Operationen in einem dem Fahrrohr 7 separat nachgeordneten Fahrrohrstück 5 der Dreheinheit 6 gehaltert ist.

In Fig. 7 ist der Einsatz der Rohrpostbüchse 2 im Fahrrohrstück 5 in einer stationären Position 71 im Moment des Abziehens des Deckels 20 vom Mittelkörper 60 der Rohrpostbüchse 2 gezeigt. Zweckmäßigerweise steht der sich unterhalb einer Deckelplatte 65 radial von außen nach innen verjüngende Dekkel 20 zum Teil über der Oberkante 67 des Fahrrohrstückes 5 über, so daß er vorzugsweise durch die Deckelabzugsvorrichtung 23 problemlos abgezogen werden kann. Die Rohrpostbüchse 2 bleibt während der Einstellungen in die drei stationären Positionen 13,71,72 immer im Fahrrohrstück 5 gehaltert.

Die Halterung der Rohrpostbüchse 2 in dem Fahrrohrstück 5 in der stationären Position 71 übernimmt der Büchsenhalter 22, der eine horizontal angeordnete, konkave, plattenartige Halbrundgabel 21 besitzt, die plattenmäßig im Querschnitt derart bemessen ist, daß sie in einen Halteschlitz 51 in der Wandung des Fahrrohrstückes 5 bei einer Verdrehung des Fahrrohrstükkes 5 durch die Dreheinheit 6 um einen Winkel von 60° entgegengesetzt zum Uhrzeigersinn einpaßbar ist und somit die Rohrpostbüchse 2 in dem Fahrrohrstück 5 arretiert. Die Innenwandung der Halbrundgabel 21 umfaßt formschlüssig die Außenwandung des Mittelkörpers 60 vorzugsweise mindestens bis zur Hälfte und liegt breitseitig anschlagend vorzugsweise auf der Bodenmanschette 62 auf, um der Rohrpostbüchse 2 einen Halt beim Abziehen und Aufsetzen des Deckels 20 zu geben. Der Dekkelabzugszylinder 24 hat eine Kolbenstange 57, die endseitig mit dem außerhalb des Zylinders 24 befindlichen, kolbenartigen Deckelabzieher 68 verbunden ist, der vorzugsweise aus einem die Deckelplatte 65 unterfassenden Umgreifarm 69 und einer in die Deckelradialverjüngung 63 passenden Halbrundgabel 70 besteht.

Im Probenführungsrohr 3, das vorzugsweise um einen Winkel von 60° im Uhrzeigersinn vom Fahrrohr 7 verdreht angeordnet ist, befindet sich baulich zwischengeordnet außerhalb, vorzugsweise oberhalb des Gehäuses 54 ein Dosiergerät 28, mit dem eine Menge bzw. ein Volumen des Probenmaterials vorgebbar und abfüllbar ist (Fig. 6). Das Probenführungsrohr 3 ist auf der Rohrhalterungsplatte 39 vorzugsweise angeflanscht und durch die Rohrhalterungsplatte 39 als Probenführungsrohrstutzen 58 weitergeführt, an dem unterseitig ein vorzugsweise elastischer Dichtungsring 27 befestigt, insbesondere angeklebt ist.

Dem Probenführungsrohrstutzen 58 befindet sich senkrecht gegenüberliegend beabstandet der in der Arbeitsplatte 40 befestigte Probenrohrzylinder 26.

Die Dreheinheit 6 schwenkt aus der stationären Position 71 der Deckelabzugsvorrichtung 23 in die stationäre Position 72 des Probenführungsrohres 3 vorzugsweise um einen Winkel von 120° im Uhrzeigersinn unter den Probenführungsrohrstutzen 58, so daß der dem Stutzen 58 gegenüberliegend angeordnete Probenzylinder 26 seinen außen befindlichen Probenhalterkolben 73 axial verschieben kann, der die Bodenplatte 66 berührt und die geöffnete Rohrpostbüchse 2 nach oben gegen den Dichtungsring 27 des Probenführungsrohrstutzens 58 abdichtend preßt.

In Fig. 8 ist eine Hinteransicht zur Fig. 1 gezeigt, ohne daß in der Endstation 1 eine Rohrpostbüchse 2 vorhanden ist. Der Elektromotor 14, der insbesondere als Drehstromgetribemotor oder Gleichstromgetriebemotor ausgebildet ist, besitzt ein angeschlossenes Getriebeteil 52 (auch in Fig. 4), das mit der Schaltscheibe 15 in Verbindung steht. Bei entsprechender gesteuerter Schaltung des Drehstromgetriebemotors 14 verdreht das Getriebeteil 52 die Schaltscheibe 15 im bzw. entgegensetzt zum Uhrzeigersinn. Z.B. wird das Fahrrohrstück 5 bei einer Umdrehung der Schaltscheibe 15 entgegen dem Uhrzeigersinn zum Probenführungsrohr 3 und bei einer Umdrehung der Schaltscheibe 15 im Uhrzeigersinn zur Deckelabzugsvorrichtung 23 vom Fahrrohr 7 aus verschwenkt.

Im folgenden wird die Funktionsweise der erfindungsgemäßen Rohrpostendstation 1 zur Befüllung der Rohrpostbüchse 2 mit Probenmaterial beschrieben:
In der Rohrpostendstation 1 wird die von der Laborrohrpostendstation kommende leere Rohrpostbüchse 2 vorzugsweise automatisch in den drei stationären Positionen 13,71,72,71,13 in dieser Reihenfolge empfangen, geöffnet, mit der Probe befüllt, wieder verschlossen und zurückgeschickt. Mittels eines Gebläses 30 im Saugluftbetrieb kann die leere Rohrpostbüchse 2 von der Laborrohrpostendstation zur empfangenden Rohrpostendstation 1 transportiert werden. Die Zuführung des Probenmaterials in die Rohrpostbüchse 2 erfolgt über eine Probennahme mit einem Probenführungsrohr 3, dessen Bemessung von den Eigenschaften und Mengenstrom des zu probenden Materials abhängt.

Um die Rohrpostbüchse 2 zu empfangen, werden das Fahrrohrstück in die Position 13 gebracht und der Verschlußaußenkolben 10 des Fahrrohrzylinders 4 durch das Fahrrohrstück 5 der Dreheinheit 6 in das endseitige Innere des Fahrrohres 7 verschoben und das Fahrrohr 7 verschlossen. Durch die Rückschlagklappe 9 im T-förmigen Rohrstück 8 außerhalb der Rohrpostendstation 1 kann die vor der Rohrpostbüchse 2 her geschobene Luft entweichen, wenn das Gebläse 30 nicht im Saugluftbetrieb, sondern als Gebläse in bzw. an der Laborrohrpostendstation installiert ist und von da aus im Druckluftbetrieb arbeitet. Nach dem Passieren des T-förmigen Rohrstücks 8 bildet sich ein Luftpolster zwischen dem Boden 59 der Rohrpostbüchse 2 und dem das Fahrrohr 7 verschließenden Verschlußaußenkolben 10. Dadurch wird die Rohrpostbüchse 2 abgebremst und in den Endbereich des Fahrrohres 7 weich eingefahren.

Der am Fahrrohr 7 im Rohranschlußblock 12 installierte Näherungssensor 11 meldet der Steuerungs- und Versorgungseinheit 25 die Ankunft der Rohrpostbüchse 2 im Endbereich des Fahrrohres 7. Nach dem Aufliegen der Rohrpostbüchse 2 auf dem Verschlußaußenkolben 10 fährt dieser mit der Rohrpostbüchse 2 in das Fahrrohrstück 5 der Dreheinheit 6 zurück.

Die Rohrpostbüchse 2 bleibt während der Befüllung bis zum erneuten Absenden hin zur Laborrohrpostendstation in dem Fahrrohrstück 5. Der Verschlußaußenkolben 10 wird vor der Verschwenkung des Fahrrohrstücks 5 zweckmäßigerweise aus dem unteren Endbereich des Fahrrohrstücks 5 zurückgenommen. Die Dreheinheit 6 wird über den Drehstromgetriebemotor 14 und über die Schaltscheibe 15 mit den beiden beabstandeten Kurvenrollen 16, die in den Schaltstern 17 eingreifen und den Schaltstern 17 signalgemäß verdrehen können, bewegt. Die Steuerung und die Erfassung der exakten Position des Schaltsterns 17 und somit der Dreheinheit 6 erfolgt über die auf der Arbeitplatte 40 befestigten Näherungssensoren 18 und ein dem Schaltstern 17 zugeordnetes Kodiersystem in der Steuerungs- und Versorgungseinheit 25.

Zum Entfernen des Deckels 20 der Rohrpostbüchse 2 schwenkt die Dreheinheit 6 um 60° entgegen dem Uhrzeigersinn in die stationäre Position 71, die Deckelabziehposition, und führt den Halteschlitz 51 des Fahrrohrstücks 5 mit der enthaltenen Rohrpostbüchse 2 in die konkave Halbrundgabel 21 des Büchsenhalters 22. Durch sperrendes Aufliegen der Halbrundgabel 21 auf der Bodenmanschette 62 wird die Rohrpostbüchse 2 nach oben in Abziehrichtung fest gehaltert. Der Deckel 20 der Rohrpostbüchse 2 kann anschließend von der Halbrundgabel 70 des kolbenartigen Deckelabziehers 68, der über die Kolbenstange 57 mit dem inneren Kolben (nicht eingezeichnet) des Deckelabzugszylinders 24 in Verbindung steht, abgezogen werden.

Der kolbenartige Deckelabzieher 68 fährt in den Deckelabzugszylinder 24 zurück und zieht dabei den Deckel 20 von der fest gehalterten Rohrpostbüchse 2 ab. Vorzugsweise ist der Deckelabzugszylinder 24 wie alle Zylinder der anderen Kolbenzylindersysteme des Befüllungsblockes 19 auch als doppeltwirkender Zylinder ausgebildet.

Die Dreheinheit 6 schwenkt um einen Winkel von 120° im Uhrzeigersinn in die dritte stationäre Position 72 -Füllen/Entleeren- unter den Probenführungsrohrstutzen 58. Der Probenhalterkolben 73 des Probenrohrzylinders 26 fährt aus, berührt die Bodenplatte 66 der Rohrpostbüchse 2 und preßt die geöffnete Rohrpostbüchse 2 nach oben gegen den vorzugsweise elastischen Dichtungsring 27 des Probenführungsrohrstutzens 58. Das Dosiergerät 28 befüllt nach Signalanweisung die Rohrpostbüchse 2 mit der geforderten Menge des Probenmaterials. Die Pressung der Rohrpostbüchse 2 gegen den Dichtungsring 27 gewährleistet eine sichere Abdichtung.

Nach dem Befüllen der Rohrpostbüchse 2 fährt der innere Kolben des Probenrohrzylinders 26 den Probenhalterkolben 73 in seine Ausgangsposition zurück.

Die Dreheinheit 6 schwenkt aus der dritten stationären Position 72 um den Winkel 120° entgegen dem Uhrzeigersinn in die zweite stationäre Position 71 -Schließen/Öffnen- zurück in die konkave Halbrundgabel 21 des Büchsenhalters 22.

Der kolbenartige Deckelabziehers 23 des Deckelabziehzylinders 24 fährt mit dem gehalterten Deckel 20 senkrecht nach unten in Richtung zur offenen Rohrpostbüchse 2, paßt den Deckel 20 auf die Rohrpostbüchse 2 und verschließt diese.

Die Dreheinheit 6 schwenkt um einen Winkel von 60° im Uhrzeigersinn in die erste stationäre Position 13 -Senden/ Empfangen- und bringt das Fahrrohrstück 5 mit der geschlossenen Rohrpostbüchse 2 unter den Endbereich des Fahrrohres 7.

Der Verschlußaußenkolben 10 des Fahrrohrzylinders 4 fährt aus und schiebt die Rohrpostbüchse 2 aus dem Fahrrohrstück 5 axial in das Fahrrohr 7.

Der Näherungssensor bzw. -schalter 11 am Fahrrohr 7 meldet den Wiedereintritt der Rohrpostbüchse 2, wodurch das Gebläse 30 eingeschaltet und die Rohrpostbüchse 2 in Richtung zur Laborrohrpostendstation mittels Druckluft transportiert wird.

Die erforderliche Transportluft wird mittels des Gebläses 30 an der Rückschlagklappe 29 vorbei und durch den Verbindungskanal 42 dem Endbereich des Fahrrohres 7 über die Luftöffnungen 55,56 zugeführt. Die Luft strömt in das Fahrrohr 7 zwischen dem Verschlußaußenkolben 10 und dem Boden 59 der Rohrpostbüchse 2 ein und drückt die Rohrpostbüchse 2 vom Verschlußaußenkolben 10 weg durch das Fahrrohr 7. Damit wird das Fahrrohr 7 durch das pneumatische Antriebssystem, vorzugsweise das Gebläse 30 im Wendebetrieb gemäß der Transportrichtung der Rohrpostbüchse 2 betrieben. Der Verschlußaußenkolben 10 verschließt vorzugsweise bis zur Ankunft der gefüllten Rohrpostbüchse 2 in der Laborrohrpostendstation das Fahrrohr 7.

Die erfindungsgemäße Rohrpostendstation 1 weist eine einfache und robuste Mechanik auf. Durch die Anordnung der einzelnen Bestandteile der Endstation 1 und ihrer Zugänglichkeit ist die Endstation 1 einfach zu warten. Das pneumatische Wendeantriebsprinzip erlaubt eine genaue Positionierung ohne großen Steuerungsaufwand. Die Verfügbarkeit ist gegenüber der bisherigen bekannten Technik wesentlich erhöht.

Im wesentlichen ist die Laborrohrpostendstation ebenso aufgebaut wie die beschriebene Rohrpostendstation zur Rohrpostbüchsenbefüllung. Zweckmäßigerweise ist nach der Rohrpostbüchsenöffnung, z.B. durch das Abziehen des Bodens 59 bzw. des Deckels 20 die Rohrpostbüchse 2 aus einem Laborfahrrohrstück zu nehmen bzw. zu entfernen und das Probenmaterial einem Laborprobenführungsrohr zuzuführen.

Die Erfindung hat den Vorteil, daß der Ablauf in der gesamten Rohrpostanlage automatisch steuerbar ist und daß wesentlich weniger materieller Aufwand bezüglich der Abdichtungen des Fahrrohrstücks 5 in allen drei stationären Positionen 13,71, 72 betrieben werden muß.

### Bezugszeichenliste

- 1: Rohrpostendstation
- 2: Rohrpostbüchse
- 3: Probenführungsrohr
- 4: Fahrrohrzylinder
- 5: Fahrrohrstück
- 6: Dreheinheit
- 7: Fahrrohr
- 8: T-förmiges Rohrstück
- 9: Rückschlagklappe
- 10: Verschlußaußenkolben
- 11: Näherungssensor
- 12: Rohranschlußblock
- 13: stationäre Position
- 14: Elektromotor
- 15: Schaltscheibe
- 16: Kurvenrollen
- 17: Schaltstern
- 18: Näherungssensor
- 19: Befüllungsblock
- 20: Deckel
- 21: Halbrundgabel
- 22: Büchsenhalter
- 23: Deckelabzugsvorrichtung
- 24: Deckelabzugszylinder
- 25: Steuerungs- und Versorgungseinheit
- 26: Probenrohrzylinder
- 27: Dichtungsring
- 28: Dosiergerät
- 29: Rückschlagklappe
- 30: Gebläse
- 31: Arbeitseinheit
- 32: Bedienterminal
- 33: Luftrohr
- 34: Kabelanschluß
- 35: Säule
- 36: Säule
- 37: Säule
- 38: Säule
- 39: Rohrhalterungsplatte
- 40: Arbeitsplatte
- 41: Bodenblech
- 42: Verbindungskanal
- 43: Mittellinie
- 44: unterer Schwenkarm
- 45: oberer Schwenkarm
- 46: Rohrteil
- 47: Näherungssensor
- 48: Drehachse
- 49: Einbuchtung
- 50: Strahlelement
- 51: Halteschlitz
- 52: Getriebe
- 53: Kolbenstange
- 54: Gehäuse
- 55: Luftöffnung
- 56: Luftöffnung
- 57: Kolbenstange
- 58: Probenführungsrohrstutzen
- 59: Boden
- 60: Mittelkörper
- 61: Deckelmanschette
- 62: Bodenmanschette
- 63: Radialverjüngung
- 64: Radialverjüngung
- 65: Deckelplatte
- 66: Bodenplatte
- 67: Oberkante
- 68: kolbenartiger Deckelabzieher
- 69: Umgreifarm
- 70: Halbrundgabel
- 71: stationäre Position
- 72: stationäre Position
- 73: Probenhalterkolben
- 74: Kreisbogen

- L: Transportluftrichtung

## Patentansprüche

1. Rohrpostanlage mit mindestens zwei Rohrpostendstationen (1), die durch ein Fahrrohr (7) miteinander in Verbindung stehen, in dem eine Rohrpostbüchse (2) zwischen den beiden Rohrpostendstationen (1) mittels eines pneumatischen Transportantriebssystems im Wendebetrieb hin- und herförderbar ist, wobei die eine Endstation (1) zu Probenbefüllungsoperationen und die andere zu Probenentnahmeoperationen vorgesehen sind und jeweils eine Steuerungs- und Versorgungseinheit (25) sowie eine Arbeitseinheit (31) besitzen, in der neben einer stationären Position (13) zum Empfangen/Senden zwei weitere stationäre Positionen (71,72) zum Öffnen/Schließen und zum Füllen/Entleeren vorhanden sind, wobei die Positionen (13,71,72) auf einem Kreisbogen (74) angeordnet sind, und die eine Dreheinheit (6) zur kreisbogengleichartigen Verschwenkung der Rohrpostbüchse (2) zu den drei Positionen (13,71,72) enthält,
**dadurch gekennzeichnet,**
daß an den drei stationären Positionen (13,71,72) in rohrpostbüchsenaxialer Richtung jeweils ein fest angeordnetes Kolbenzylindersystem (10,4,53;68,24,57;73,26) mit einem steuerbaren, operationsgemäß geformten Außenkolben (10;68; 73) vorgesehen ist, der in axialer Richtung an der Rohrpostbüchse (2) operationsunterstützend tätig ist, die in einem dem Fahrrohr (7) separat nachgeordneten Fahrrohrstück (5) der Dreheinheit (6) gehaltert ist.

2. Rohrpostanlage nach Anspruch 1,
**dadurch gekennzeichnet,**
daß dem Ende des Fahrrohres (7) das Kolbenzylindersystem (10,4,53) mit der. Verschlußaußenkolben (10) in einem axialen Abstand entfernt gegenüberliegend angeordnet ist, in dem das separate, exzentrisch in der Dreheinheit (6) befestigte Fahrrohrstück (5) derart in der stationären Position (13) zum Empfangen/Senden einstellbar ist, daß der entsprechend bemessene Verschlußaußenkolben (10) durch das Fahrrohrstück (5) hindurch bis zum Fahrrohr (7) innenangepaßt bewegbar und zur rohrinternen axialen Verschiebung der Rohrpostbüchse (2) im Fahrrohrstück (5) gesteuert betätigbar ist.

3. Rohrpostanlage nach einem der vorhergehenden Ansprüche,
**dadurch gekennzeichnet,**
daß im Rohrendbereichsinnern des Fahrrohrs (7) eine luftpolsterartige Bremsung für die ankommende Rohrpostbüchse (2) vorhanden ist, wenn der Verschlußaußenkolben (10) des Kolbenzylindersystems (10,4,53) das Ende des Fahrrohres (7) verschließt.

4. Rohrpostanlage nach einem der vorhergehenden Ansprüche,
**dadurch gekennzeichnet,**
daß die Arbeitseinheit (31) und die Steuerungs- und Versorgungseinheit (25) von einem gemeinsamen Gehäuse (54), das vorzugsweise quaderförmig, schrankartig ausgebildet ist, umgeben sind.

5. Rohrpostanlage nach Anspruch 4,
**dadurch gekennzeichnet,**
daß die Arbeitseinheit (31) im Inneren eine auf vier vorzugsweise runde Säulen (35,36,37,38) befindliche obere, horizontal gerichtete Rohrhalterungsplatte (39) und eine untere, etwa mittig eingepaßte, ebenfalls horizontale Arbeitsplatte (40) enthält, wobei die vier Säulen (35,36,37, 38) vorzugsweise am Bodenblech (41) der Arbeitseinheit (31) befestigt sind.

6. Rohrpostanlage nach Anspruch 5,
**dadurch gekennzeichnet,**
daß die Rohrhalterungsplatte (39) die Basis eines Rohranschlußblockes (12) ist, der hauptsächlich aus drei senkrecht zueinander gerichteten Rohren besteht, die zum Teil an der Rohrhalterungsplatte (39) befestigt, vorzugsweise angeflanscht sind und zum Teil durch die Rohrhalterungsplatte (39) hindurchgehen sowie durch entsprechende Stutzen weitergeführt sind: Erstens dem Fahrrohr (7), in dem die Rohrpostbüchse (2) im Wendebetrieb transportierbar ist, zweitens einem Probenführungsrohr (3) und drittens einem Luftrohr (33), in dem das für den Transport der Rohrpostbüchse (2) notwendige Antriebsmedium, vorzugsweise Druckluft bereitgestellt wird.

7. Rohrpostanlage nach Anspruch 6,
**dadurch gekennzeichnet,**
daß die Längsmittelachsen des Fahrrohrs (7), des Probenführungsrohres (3) und von Halbrundgabeln (21,70) einer Dekkelabzugsvorrichtung (23) senkrecht zur Arbeitsplatte (40) auf einem Kreisbogen (74) liegen, dessen Mittelpunkt sich auf der Drehachse (48) der Dreheinheit (6) befindet, deren Fahrrohrstück (5) eine Längsmittelachse aufweist, die sich bei bewegtem Fahrrohrstück (5) auf dem gleichen Kreisbogen (74) bewegt, wobei die Längsmittelachsen im wesentlichen mit den stationären Positionen (13,71,72) übereinstimmen.

8. Rohrpostanlage nach einem der vorhergehenden Ansprüche,
**dadurch gekennzeichnet,**
daß das Fahrrohr (7) senkrecht in der Rohrpostendstation (1) in einem Befüllungsblock (19) endet.

9. Rohrpostanlage nach einem der vorhergehenden Ansprüche 6 bis 8,
**dadurch gekennzeichnet,**
daß das Luftrohr (33) über einen Verbindungskanal (42) mit dem unteren Endbereich des Fahrrohres (7) verbunden ist, wobei der Verbindungskanal (42) zum Fahrrohr (7) mindestens eine Luftdurchgangsöffnung (55 bzw. 56) aufweist, und an ein Gebläse (30) angeschlossen sowie durch ein Rückschlagventil, vorzugsweise eine federgestützte Rückschlagklappe (29) verschließbar ist.

10. Rohrpostanlage nach den Ansprüche 5 bis 9,
**dadurch gekennzeichnet,**
daß das Fahrrohrstück (5) der Dreheinheit (6) mindestens über einen drehbar gelagerten Schwenkarm (44;45), vorzugsweise über einen oberen und einen unteren Schwenkarm (44, 45), die durch ein Rohrteil (46) voneinander beabstandet sind, mit einem drehbar gelagerten Schaltstern (17) der Arbeitsplatte (40) in Verbindung steht und vorzugsweise den gleichen Innendurchmesser wie das Fahrrohr (7) besitzt.

11. Rohrpostanlage nach einem der Ansprüche 5 bis 10,
**dadurch gekennzeichnet,**
daß das Kolbenzylindersystem (4,10,53) in der stationären Position (13) des Fahrrohres (7) einen Fahrrohrzylinder (4) aufweist, der an der horizontalen Arbeitsplatte (40) nach unten angeflanscht ist, dessen innerer Kolben über eine Kolbenstange (53) mit einem Verschlußaußenkolben (10) fest verbunden ist, der durch das Fahrrohrstück (5) bis in denunteren Endbereich des Fahrrohrs (7) reicht, wenn das Fahrrohr (7), das Fahrrohrstück (5) und der Fahrrohrzylinder (4) achsenparallel fluchtend angeordnet sind, wobei das Fahrrohr (7) und der Fahrrohrzylinder (4) zueinander fest positioniert sind.

12. Rohrpostanlage nach einem der vorhergehenden Ansprüche,
**dadurch gekennzeichnet,**
daß außerhalb der Rohrpostendstation (1) in das Fahrrohr (7) ein T-förmiges Rohrstück (8) eingebaut ist, das mit einer dem T-Längsbalken zugeordneten federbelasteten Rückschlagklappe (9) versehen ist.

13. Rohrpostanlage nach einem der vorhergehenden Ansprüche,
**dadurch gekennzeichnet,**
daß ein Näherungssensor (11), insbesondere ein Näherungsschalter am Fahrrohr (7) angeordnet ist, der die Stellung der Rohrpostbüchse (2) im Fahrrohr rückmeldet, wodurch das Gebläse (30) je nach Art des Wendebetriebs in einen Saugluft- oder Drucklufterzeugungszustand einschaltbar oder abschaltbar ist.

14. Rohrpostanlage nach einem der Ansprüche 5 bis 13,
**dadurch gekennzeichnet,**
daß die Dreheinheit (6), deren zentrale Drehachse (48) vorzugsweise exzentrisch auf einer der Mittellinien (43) in der Arbeitsplatte (40) liegt, durch einen unterhalb der Arbeitsplatte (40) befestigten Elektromotor (14) durchgreifend verschwenkbar ist.

15. Rohrpostanlage nach Anspruch 14,
**dadurch gekennzeichnet,**
daß die Dreheinheit (6) im wesentlichen aus dem vom Elektromotor (14) bewegbaren, drehbar gelagerten Schaltstern (17) und aus zwei parallel gerichteten Schwenkarmen (44, 45) besteht, die jeweils an ihrem drehpunktzugeordneten Endbereich durch ein geflanschtes Rohrteil (46) voneinander beabstandet drehfest verbunden sind.

16. Rohrpostanlage nach einem der Ansprüche 10 bis 15,
**dadurch gekennzeichnet,**
daß am freien Endbereich der Schwenkarme (44,45) das Fahrrohrstück (5) vorzugsweise jeweils unter- und oberendig fest gehaltert ist.

17. Rohrpostanlage nach einem der Ansprüche 10 bis 16,
**dadurch gekennzeichnet,**
daß zur Dreheinheit (6) eine außerhalb der Drehachse (48) des Schaltsterns (17) drehbar gelagerte Schaltscheibe (15) gehört, die axial gerichtet zwei auf ihrer Durchmesserlinie randbereichseitig beabstandete Kurvenrollen (16) besitzt, von denen immer mindestens eine in eine der zwölf randseitigen, radialen Einbuchtungen (49) des Schaltsterns (17) eingreift.

18. Rohrpostanlage nach Anspruch 17,
**dadurch gekennzeichnet,**
daß der Schaltstern (17) im wesentlichen eine Drehscheibe mit vorzugsweise zwölf radial zur Drehachse (48) gerichteten, schlitzartigen Einbuchtungen (49), die zur Drehachse (48) hin konvex gerundet sind, ist und zwölf strahlenförmig ausgebildete Strahlelemente (50) besitzt, wobei in zwei benanchbarten Einbuchtungen (49) jeweils die senkrecht abstehende Kurvenrolle (16) der Schaltscheibe (15) formschlüssig eingreift.

19. Rohrpostanlage nach Anspruch 18,
**dadurch gekennzeichnet,**
daß auf der Arbeitsplatte (40) zwei Näherungssensoren (18, 47), insbesondere Näherungsinitiatoren befestigt sind, wobei der eine Näherungsssensor (18) zur Angabe der Stellung der Strahlelemente (50) im Bereich der Strahlelemente (50) zwischen dem Schaltstern (17) und der Arbeitsplatte (40) angeordnet und der andere Näherungssensor (47) zur momentanen Angabe der Drehstellung der Schaltscheibe (15) im Bereich an der Schaltscheibe (15) zur Arbeitsplatte (40) plaziert sind.

20. Rohrpostanlage nach Anspruch 19,
**dadurch gekennzeichnet,**
daß die Näherungssensoren (18,47) der Steuerungseinheit (25) die Schaltstellung der Strahlelemente (50) des Schaltsterns (17) mitteilen, wobei die jeweils um einen Winkel von 30° bzw. von einem Mehrfachen von 30° veränderbare Schaltstellung des Schaltsterns (17) und somit der Ort des Fahrrohrstückes (5) mit der Rohrpostbüchse (2) an einem Bedienfeld (32) der Steuerungs- und Versorgungseinheit (25) anzeigbar ist.

21. Rohrpostanlage nach einem der vorhergehenden Ansprüche,
**dadurch gekennzeichnet,**
daß die im Wendebetrieb pneumatisch transportierte Rohrpostbüchse (2) deckel- und bodenseitig vorzugsweise baulich gleichartig ausgeführt ist und im wesentlichen aus einem Deckel (20), einem hohlzylindrischen Mittelkörper (60) und einem Boden (59) besteht, wobei der Mittelkörper (60) in Richtung zum Deckel (20) und zum Boden (59) jeweils eine Manschette (61, 62) aufweist.

22. Rohrpostanlage nach Anspruch 21,
**dadurch gekennzeichnet,**
daß der Deckel (20) und der Boden (59) der Rohrpostbüchse (2) vorzugsweise gleichförmig ausgebildet sind und unterhalb einer Deckelplatte (65) bzw. oberhalb einer Bodenplatte (66) jeweils eine Radialverjüngung (63 bzw. 64) besitzen, und der Mittelkörper (60) im Boden- bzw. im Deckelbereich voneinander beabstandete ringförmgie Manschetten (61, 62) aufweist, die sich an das Fahrrohr (7) bzw. Fahrrohrstück (5) derart anschmiegen, so daß bei geringem Spiel und vorhandener Saugluft bzw. Druckluft seitens des Gebläses (30) die Rohrpostbüchse (2) mit hoher Geschwindigkeit im Fahrrohr (7) bewegbar ist.

23. Rohrpostanlage nach einem der Ansprüche 21 und/oder 22,
**dadurch gekennzeichnet,**
daß die Rohrpostbüchsenbereiche über der Deckelmanschette (61) und unter der Bodenmanschette (62) durchmessermäßig etwas kleiner bemessen sind, damit im Saug- bzw. Druckluftbetrieb an den Manschetten (62;61) je nach Transportrichtung die notwendigen Kräfte ausübbar sind.

24. Rohrpostanlage nach einem der Ansprüche 21 bis 23,
**dadurch gekennzeichnet,**
daß der Boden (59) der Rohrpostbüchse (2) fest mit dem Mittelkörper (60) verbunden ist und eine andere Form als der Deckel (20) aufweist, der relativ zum Mittelkörper (60) verschiebbar ist.

25. Rohrpostanlage nach einem der Ansprüche 7 bis 24,
**dadurch gekennzeichnet,**
daß die Deckelabzugsvorrichtung (23) im wesentlichen aus einem Büchsenhalter (22), der vorzugsweise an der Arbeitsplatte (40) befestigt ist, und aus einem dem Büchsenhalter (22) senkrecht beabstandet gegenüberliegenden Deckelabzugszylinder (24) mit vorgesehenem innerem Kolben und einem Außenkolben (68) besteht, wobei insbesondere der Deckelabzugszylinder (24) und der Büchsenhalter (22) um einen Winkel von 60° zum Fahrrohr (7) entgegengesetzt zum Uhrzeigersinn und um einen Winkel von 120° entgegen dem Uhrzeigersinn zum Probenführungsrohr (3) angeordnet sind.

26. Rohrpostanlage nach Anspruch 25,
**dadurch gekennzeichnet,**
daß der Deckelabzugszylinder (24) eine Kolbenstange (57) hat, die endseitig mit dem Außenkolben, vorzugsweise einem kolbenartigen Deckelabzieher (68) verbunden ist, der vorzugsweise aus einem die Deckelplatte (65) unterfassenden Umgreifarm (69) und einer in eine Deckelradialverjüngung (63) passenden konkaven Halbrundgabel (70) besteht.

27. Rohrpostanlage nach einem der Ansprüche 21 bis 26,
**dadurch gekennzeichnet,**
daß die Rohrpostbüchse (2) derart in dem Fahrrohrstück (5) gehaltert ist, daß der Deckel (20) über einer Oberkante (67) des Fahrrohrstücks (5) übersteht, so daß der Deckel (20) durch die Leckelabzugsvorrichtung (23) unterfassend greifbar ist.

28. Rohrpostanlage nach einem der Ansprüche 25 bis 27,
**dadurch gekennzeichnet,**
daß in der stationären Position (71) zum Öffnen/Schließen an der Deckelabzugsvorrichtung (23) die Halterung der Rohrpostbüchse (2) in dem Fahrrohrstück (5) der Büchsenhalter (22) übernimmt, der eine konkave, plattenartige Halbrundgabel (21) besitzt, die plattenmäßig derart gemessen ist, daß sie in einen Halteschlitz (51) in der Wandung des Fahrrohrstückes (5) bei einer Verdrehung des Fahrrohrstückes (5) um einen Winkel von etwa 60° entgegengesetzt zum Uhrzeigersinn einpaßbar ist und somit die Rohrpostbüchse (2) in dem Fahrrohrstück (5) arretiert.

29. Rohrpostanlage nach Anspruch 28,
**dadurch gekennzeichnet,**
daß die Innenwandung der konkaven Halbrundgabel (21) die Außenwandung des Mittelkörpers (60) vorzugsweise mindestens zur Hälfte formschlüssig umfaßt und breitseitig anschlagend auf der Bodenmanschette (62) aufliegt, damit der Deckel (20) relativ zum Mittelkörper (60) der Rohrpostbüchse (2) verschiebbar ist.

30. Rohrpostanlage nach einem der Ansprüche 6 bis 29,
**dadurch gekennzeichnet,**
daß sich im Probenführungsrohr (3), das vorzugsweise um einen Winkel von 60° im Uhrzeigersinn vom Fahrrohr (7) verdreht angeordnet ist, baulich zwischengeordnet außerhalb, insbesondere oberhalb des Gehäuses (54) ein Dosiergerät (28) befindet, mit dem die Menge des Probenmaterials vorgebbar abfüllbar ist.

31. Rohrpostanlage nach Anspruch 30,
**dadurch gekennzeichnet,**
daß das Dosiergerät (28) derart ausgebildet ist, daß es nach Signalanweisung die Rohrpostbüchse (2) mit der geforderten Menge des Probenmaterials befüllt.

32. Rohrpostanlage nach einem der Ansprüche 6 bis 31,
**dadurch gekennzeichnet,**
daß das Probenführungsrohr (3) durch die Rohrhalterungsplatte (39) hindurch als Probenführungsrohrstutzen (58) weitergeführt ist, an dem sich unterseitig vorzugsweise ein elastischer Dichtungsring (27) befindet.

33. Rohrpostanlage nach Anspruch 32,
**dadurch gekennzeichnet,**
daß dem Probenführungsrohrstutzen (58) in der Rohrhalterungsplatte (39) sich senkrecht gegenüberliegend beabstandet in der Arbeitsplatte (40) ein befestigter Probenrohrzylinder (26) befindet, dessen Probenhalterkolben (73) zur Stütze der Rohrpostbüchse (2) in das Fahrrohrstück (5) einschiebbar ist, wenn das Fahrrohrstück (5) in die zugehörige stationäre Position (72) zum Füllen/Entleeren verschwenkt ist.

34. Rohrpostanlage nach einem der Ansprüche 32 und/oder 33,
**dadurch gekennzeichnet,**
daß die Dreheinheit (6) aus der stationären Position (71) zum Öffnen/Schließen der Deckelabzugsvorrichtung (23) in die stationäre Position (72) zum Füllen/Entleeren des Probenführungsrohrs (3) vorzugsweise um einen Winkel von 120° im Uhrzeigersinn unter den Probenführungsrohrstutzen (58) schwenkt, so daß der dem Stutzen (58) gegenüberliegend angeordnete Probenzylinder (26) seinen Probenhalterkolben (73) axial verschieben kann, der die Bodenplatte (66) berührt und die geöffnete Rohrpostbüchse (2) nach oben gegen den Dichtungsring (27) des Probenführungsrohrstutzens (58) abdichtend preßt.

35. Rohrpostanlage nach einem der Ansprüche 17 bis 34,
**dadurch gekennzeichnet,**
daß der Elektromotor (14), der insbesondere als Drehstromgetriebemotor ausgebildet ist, ein Getriebeteil (52) aufweist, das mit der Schaltscheibe (15) in Verbindung steht, wobei bei entsprechender gesteuerter Schaltung des Drehstromgetriebemotors (14) das Getriebeteil (52) die Schaltscheibe (15) im bzw. entgegengesetzt zum Uhrzeigersinn verdreht.

## Claims

1. Pneumatic-post system with at least two pneumatic-post end stations (1) which are connected to one another by a transmission tube (7) in which a pneumatic-post capsule (2) can be conveyed back and forth, in single-tube operation, between the two pneumatic-post end stations (1) by means of a pneumatic transporting-drive system, it being the case that one end station (1) is provided for sample-filling operations and the other end station is provided for sample-removing operations and each have a control and supply unit (25) and a working unit (31) in which there are provided, in addition to one stationary position (13) for receiving/transmitting purposes, two further stationary positions (71, 72) for opening/closing purposes and for filling/emptying purposes, the positions (13, 71, 72) being arranged on a circle arc (74), and which contains a rotating unit (6) for pivoting, with circle-arc-like action, the pneumatic-post capsule (2) to the three positions (13, 71, 72), characterized in that provided at the three stationary positions (13, 71, 72), in the axial direction of the pneumatic-post capsule, is in each case one fixed piston/cylinder system (10, 4, 53; 68, 24, 57; 73, 26) with a controllable outer piston (10; 68; 73) which has operation-related shaping and acts, to assist operations, axially on the pneumatic-post capsule (2), which is secured in a transmission-tube portion (5) of the rotating unit (6), said portion being arranged separately downstream of the transmission tube (7).

2. Pneumatic-post system according to Claim 1, characterized in that the piston/cylinder system (10, 4, 53) with the outer closure piston (10) is located opposite the end of the transmission tube (7) and is spaced apart from the same by an axial spacing in which it is possible to adjust the separate transmission-tube portion (5), which is fastened eccentrically in the rotating unit (6), in the stationary position (13) for receiving/transmitting purposes such that the correspondingly dimensioned outer closure piston (10) can be moved in an internally adapted manner through the transmission-tube portion (5) to the transmission tube (7) and can be actuated in a controlled manner in the transmission-tube portion (5) for the axial displacement of the pneumatic-post capsule (2) inside the tube.

3. Pneumatic-post system according to one of the preceding claims, characterized in that there is provided air-cushion-like braking for the incoming pneumatic-post capsule (2) in the interior of the end region of the transmission tube (7) when the outer closure piston (10) of the piston/cylinder system (10, 4, 53) closes off the end of the transmission tube (7).

4. Pneumatic-post system according to one of the preceding claims, characterized in that the working unit (31) and the control and supply unit (25) are enclosed by a common housing (54) which is preferably of cuboidal, cabinet-like design.

5. Pneumatic-post system according to Claim 4, characterized in that the working unit (31) contains, in the interior, a top, horizontally directed tube-securing panel (39), which is located on four preferably round columns (35, 36, 37, 38), and a bottom, likewise horizontal working panel (40), which is fitted in approximately centrally, the four columns (35, 36, 37, 38) preferably being fastened on the base panel (41) of the working unit (31).

6. Pneumatic-post system according to Claim 5, characterized in that the tube-securing panel (39) is the base of a tube-connection block (12) which principally comprises three vertically directed tubes which, in part, are fastened, preferably flanged, on the tube-securing panel (39) and, in part, pass through the tube-securing panel (39) and are routed further through corresponding connection stubs: first of all the transmission tube (7), in which the pneumatic-post capsule (2) can be transported during single-tube operation, secondly a sample-guiding tube (3), and thirdly an air tube (33), in which the drive medium, preferably compressed air, necessary for transporting the pneumatic-post capsule (2) is provided.

7. Pneumatic-post system according to Claim 6, characterized in that the longitudinal centre axes of the transmission tube (7), of the sample-guiding tube (3) and of half-round forks (21, 70) of a cover-withdrawal device (23) are located perpendicularly to the working panel (40) on a circle arc (74),of which the centre point is located on the axis of rotation (48) of the rotating unit (6), of which the transmission-tube portion (5) has a longitudinal centre axis which, as the transmission-tube portion (5) moves, moves on the same circle arc (74), the longitudinal centre axes essentially coinciding with the stationary positions (13, 71, 72).

8. Pneumatic-post system according to one of the preceding claims, characterized in that the transmission tube (7) terminates vertically in the pneumatic-post end station (1) in a filling block (19).

9. Pneumatic-post system according to one of the preceding Claims 6 to 8, characterized in that the air tube (33) is connected to the bottom end region of the transmission tube (7) via a connecting channel (42), it being the case that the connecting channel (42) to the transmission tube (7) has at least one air through-passage opening (55 or 56) and is connected to a fan (30) and can be closed off by a nonreturn valve, preferably a spring-assisted nonreturn valve (29).

10. Pneumatic-post system according to Claims 5 to 9, characterized in that the transmission-tube portion (5) of the rotating unit (6) is connected to a rotatably mounted star wheel (17) of the working panel (40) at least via a rotatably mounted pivot arm (44, 45), preferably via a top and a bottom pivot arm (44, 45) which are spaced apart from one another by a tube part (46), and said transmission-tube portion (5) preferably has the same internal diameter as the transmission tube (7).

11. Pneumatic-post system according to one of Claims 5 to 10, characterized in that, in the stationary position (13) of the transmission tube (7), the piston/cylinder system (4, 10, 53) has a transmission-tube cylinder (4) which is flanged in the downward direction on the horizontal working panel (40) and of which the inner piston is fixed, via a piston rod (53), to an outer closure piston (10) which extends through the transmission-tube portion (5) into the bottom end region of the transmission tube (7) when the transmission tube (7), the transmission-tube portion (5) and the transmission-tube cylinder (4) are aligned in an axis-parallel manner, the transmission tube (7) and the transmission-tube cylinder (4) being positioned in a fixed manner in relation to one another.

12. Pneumatic-post system according to one of the preceding claims, characterized in that outside the pneumatic-post end station (1) there is installed in the transmission tube (7) a T-shaped tube portion (8) which is provided with a spring-loaded nonreturn valve (9) assigned to the longitudinal member of the T.

13. Pneumatic-post system according to one of the preceding claims, characterized in that a proximity sensor (11), in particular a proximity switch, is arranged on the transmission tube (7) and indicates the position of the pneumatic-post capsule (2) in the transmission tube, as a result of which, depending on the manner of single-tube operation, the fan (30) can be switched on to a suction-air or compressed-air production state or can be switched off.

14. Pneumatic-post system according to one of Claims 5 to 13, characterized in that the rotating unit (6), of which the central axis of rotation (48) is located preferably eccentrically on one of the centre lines (43) in the working panel (40), can be pivoted throughout by an electric motor (14) fastened beneath the working panel (40).

15. Pneumatic-post system according to Claim 14, characterized in that the rotating unit (6) essentially comprises the rotatably mounted star wheel (17), which can be moved by the electric motor (14), and two parallel pivot arms (44, 45) which are connected in a rotationally fixed manner by a flanged tube part (46), in each case at their end region assigned to the centre of rotation, such that they are spaced apart from one another.

16. Pneumatic-post system according to one of Claims 10 to 15, characterized in that, at the free end region of the pivot arms (44, 45), the transmission-tube portion (5) is preferably secured in a fixed manner in each case at the bottom end and top end.

17. Pneumatic-post system according to one of Claims 10 to 16, characterized in that the rotating unit (6) includes an indexing plate (15) which is mounted rotatably outside the axis of rotation (48) of the star wheel (17) and, in the axial direction, has two followers (16) which are spaced apart in the border region on the diameter line of said indexing plate and of which there is always at least one engaging in one of the twelve border-side, radial indents (49) of the star wheel (17).

18. Pneumatic-post system according to Claim 17, characterized in that the star wheel (17) is essentially a rotary disc with preferably twelve slot-like indents (49) which are directed radially in relation to the axis of rotation (48) and are rounded convexly in the direction of the axis of rotation (48), and the star wheel also has twelve radially formed radial elements (50), the vertically projecting followers (16) of the indexing plate (15) engaging with a form fit in each case in two adjacent indents (49).

19. Pneumatic-post system according to Claim 18, characterized in that two proximity sensors (18, 47), in particular proximity switches, are fastened on the working panel (40), it being the case that one proximity sensor (18) is arranged, for indicating the position of the radial elements (50), in the region of the radial elements (50) between the star wheel (17) and the working panel (40), and the other proximity sensor (47) is placed, for indicating the rotary position of the indexing plate (15) at any one time, in the region of the indexing plate (15) in relation to the working panel (40).

20. Pneumatic-post system according to Claim 19, characterized in that the proximity sensors (18, 47) of the control unit (25) indicate the indexed position of the radial elements (50) of the star wheel (17), it being possible for the indexed position of the star wheel (17), which can be changed in each case by an angle of 30° or by a multiple of 30°, and thus the location of the transmission-tube portion (5) with the pneumatic-post capsule (2) to be displayed on a control panel (32) of the control and supply unit (25).

21. Pneumatic-post system according to one of the preceding claims, characterized in that a pneumatic-post capsule (2), which is transported pneumatically in single-tube operation, is preferably of the same structural design on the cover side and base side and essentially comprises a cover (20), a hollow-cylindrical central body (60) and a base (59), the central body (60) having a collar (61, 62) in each case in the direction of the cover (20) and of the base (59).

22. Pneumatic-post system according to Claim 21, characterized in that the cover (20) and the base (59) of the pneumatic-post capsule (2) are preferably of the same design and, respectively beneath a cover plate (65) and above a base plate (66), each have a radial constriction (63 or 64, respectively), and the central body (60) has, in the base and in the cover regions, annular, spaced-apart collars (61, 62) which fit snugly against the transmission tube (7) and the transmission-tube portion (5) such that, with a low level of play and the fan (30) producing suction air or compressed air, the pneumatic-post capsule (2) can be moved at high speed in the transmission tube (7).

23. Pneumatic-post system according to one of Claims 21 and/or 22, characterized in that, above the cover collar (61) and beneath the base collar (62), the regions of the pneumatic-post capsule are dimensioned to be somewhat smaller in diameter in order that, during suction-air or compressed-air operation, the collars (62; 61) can be subjected to the necessary forces depending on the transporting direction.

24. Pneumatic-post system according to one of Claims 21 to 23, characterized in that the base (59) of the pneumatic-post capsule (2) is fixed to the central body (60) and is shaped differently from the cover (20), which can be displaced relative to the central body (60).

25. Pneumatic-post system according to one of Claims 7 to 24, characterized in that the cover-withdrawal device (23) essentially comprises a capsule holder (22), which is preferably fastened on the working panel (40), and a cover-withdrawal cylinder (24), which is spaced apart vertically opposite the capsule holder (22) and has an inner piston and an outer piston (68) provided, it being the case that in particular the cover-withdrawal cylinder (24) and the capsule holder (22) are arranged at an angle of 60° in the anticlockwise direction in relation to the transmission tube (7) and at an angle of 120° in the anticlockwise direction in relation to the sample-guiding tube (3).

26. Pneumatic-post system according to Claim 25, characterized in that the cover-withdrawal cylinder (24) has a piston rod (57) which is connected on the end side to the outer piston, preferably a piston-like cover-withdrawal means (68), which preferably comprises a grip-round arm (69), which grips beneath the cover plate (65), and a concave half-round fork (70), which fits into a radial constriction (63) of the cover.

27. Pneumatic-post system according to one of Claims 21 to 26, characterized in that the pneumatic-post capsule (2) is secured in the pneumatic-tube portion (5) such that the cover (20) projects beyond a top edge (67) of the transmission-tube portion (5), with the result that the cover-withdrawal device (23) can grip beneath the cover (20).

28. Pneumatic-post system according to one of Claims 25 to 27, characterized in that in the stationary position (71) for opening/closing purposes, on the cover-withdrawal device (23), the capsule holder (22) assumes the task of securing the pneumatic-post capsule (2) in the transmission-tube portion (5), said capsule holder having a concave, plate-like half-round fork (21) of which the plate is dimensioned such that it can be fitted into a retaining slot (51) in the wall of the transmission-tube portion (5), with a rotation of the transmission-tube portion (5) through an angle of approximately 60° in the anticlockwise direction, and thus arrests the pneumatic-post capsule (2) in the transmission-tube portion (5).

29. Pneumatic-post system according to Claim 28, characterized in that the inner wall of the concave half-round fork (21) comprises, with a form fit, preferably at least half of the outer wall of the central body (60) and rests with its broad side butting against the base collar (62), in order that the cover (20) can be displaced relative to the central body (60) of the pneumatic-post capsule (2).

30. Pneumatic-post system according to one of Claims 6 to 29, characterized in that in the sample-guiding tube (3), which is preferably arranged such that it has been rotated through an angle of 60° in the clockwise direction from the transmission tube (7), there is arranged as an intermediate structure outside, in particular above, the housing (54) a dispensing unit (28) by means of which the quantity of sample material can be dispensed in a predeterminable manner.

31. Pneumatic-post system according to Claim 30, characterized in that the dispensing unit (28) is designed such that, following a signal indication, it fills the pneumatic-post capsule (2) with the required quantity of sample material.

32. Pneumatic-post system according to one of Claims 6 to 31, characterized in that the sample-guiding tube (3) is routed further through the tube-securing panel (39) as a sample-guiding-tube connection stub (58), on the underside of which an elastic sealing ring (27) is preferably located.

33. Pneumatic-post system according to Claim 32, characterized in that spaced apart vertically opposite the sample-guiding-tube connection stub (58) in the tube-securing panel (39), there is located, in the working panel (40), a fastened sample-tube cylinder (26), of which the sample-holder piston (73) can be pushed into the transmission-tube portion (5), for supporting the pneumatic-post capsule (2), when the transmission-tube portion (5) is pivoted into the associated stationary position (72) for filling/emptying purposes.

34. Pneumatic-post system according to one of Claims 32 and/or 33, characterized in that the rotating unit (6) pivots preferably through an angle of 120° in the clockwise direction, beneath the sample-guiding-tube connection stub (58), from the stationary position (71) for opening/closing the cover-withdrawal device (23) into the stationary position (72) for filling/emptying the sample-guiding tube (3), with the result that the sample cylinder (26), which is located opposite the connection stub (58), can displace its sample-holder piston (73) axially, this coming into contact with the base plate (66) and pressing the opened pneumatic-post capsule (2) upwards with sealing action against the sealing ring (27) of the sample-guiding-tube connection stub (58).

35. Pneumatic-post system according to one of Claims 17 to 34, characterized in that the electric motor (14), which is designed in particular as a three-phase geared motor, has a gear part (52) which is connected to the indexing plate (15), it being the case that, with corresponding controlled operation of the three-phase geared motor (14), the gear part (52) rotates the indexing plate (15) in the clockwise or anticlockwise direction.

## Revendications

1. Installation de communication pneumatique comprenant au moins deux stations terminales de communication pneumatique (1) qui sont en liaison entre elles par un tube de transport (7) dans lequel une boîte de communication pneumatique (2) peut être transportée en va-et-vient dans le mode navette entre les deux stations terminales de communication pneumatique (1) au moyen d'un système d'entraînement de transport pneumatique, l'une des stations terminales (1) étant prévue pour des opérations de chargement d'échantillons et l'autre pour des opérations de prélèvement d'échantillons, chacune possédant une unité de commande et d'alimentation (25) ainsi qu'une unité de travail (31) dans laquelle sont prévues, en supplément d'une position fixe (13) pour la réception/expédition, deux autres positions fixes (71, 72) pour l'ouverture/fermeture et pour le chargement/vidage, les positions (13, 71, 72) étant disposées sur un arc de cercle (74), et qui comprend une unité de rotation (6) destinée à amener la boîte de communication pneumatique (2) dans les trois positions (13, 71, 72) par un pivotement en arc de cercle, caractérisée en ce qu'à chacune des trois positions fixes (13, 71, 72), est prévu, selon la direction axiale de la boîte de communication pneumatique, un système cylindre-piston agencé fixe (10, 4, 53 ; 68, 24, 57 ; 73, 26) possédant un piston extérieur commandé (10 ; 68 ; 73) de forme appropriée à l'opération, qui est actif dans la direction axiale, en assistance de assister l'opération sur la boîte de communication pneumatique (2) qui est tenue dans un tronçon de tube de transport (5) de l'unité de rotation (6) qui est disposé séparément en aval du tube de transport (7).

2. Installation de communication pneumatique selon la revendication 1, caractérisée en ce que le système cylindre-piston (10, 4, 53) muni du piston extérieur de fermeture (10) est disposé en face et à une distance axiale de l'extrémité du tube de transport (7), dans laquelle le tronçon de tube de transport (5) séparé, fixé excentriquement dans l'unité de rotation (6) peut être réglé dans la position fixe (13) prévue pour la réception/expédition, de telle manière que le piston extérieur de fermeture (10), convenablement dimensionné puisse être repoussé à travers le tronçon de tube de transport (5) jusque dans le tube de transport (7), en s'y adaptant intérieurement, et peut être actionné sous commande pour la translation axiale de la boîte de communication pneumatique (2) à l'intérieur du tube dans le tronçon du tube de transport (5).

3. Installation de communication pneumatique selon une des revendications précédentes, caractérisée en ce qu'un freinage du genre à coussin d'air pour la boîte de communication pneumatique (2) arrivante est présent dans l'intérieur de la région terminale du tube de transport (7) lorsque le piston extérieur de fermeture (10) du système cylindre-piston (10, 4, 53) obture l'extrémité du tube de transport (7).

4. Installation de communication pneumatique selon une des revendications précédentes, caractérisée en ce que l'unité de travail (31) et l'unité de commande et d'alimentation (25) sont entourées d'un carter commun (54) qui est de préférence parallélépipédique, en forme d'armoire.

5. Installation de communication pneumatique selon la revendication 4, caractérisée en ce que l'unité de travail (31) renferme intérieurement une plaque supérieure (39) de monture de tubes orientée horizontalement, qui se trouve sur quatre colonnes, de préférence rondes (35, 36, 37, 38) et une plaque de travail inférieure (40), également horizontale, ajustée à peu près au centre, les quatre colonnes (35, 36, 37, 38) étant de préférence fixées à la tôle de fond (41) de l'unité de travail (31).

6. Installation de communication pneumatique selon la revendication 5, caractérisée en ce que la plaque (39) de monture de tubes est la base d'un bloc (12) de raccordement de tubes qui est essentiellement composé de trois tubes disposés perpendiculairement entre eux et qui, en partie, sont fixés, de préférence par brides, à la plaque (39) de monture de tubes et, en partie traversent la plaque (39) de monture de tubes, et sont prolongés à travers des tubulures correspondantes : premièrement, le tube de transport (7) dans lequel la boîte de communication pneumatique (2) peut être transportée dans le mode navette, deuxièmement un tube de guidage d'échantillons (3), et troisièmement un tube à air (33), dans lequel est approvisionné le fluide de propulsion, de préférence de l'air comprimé, nécessaire pour le transport de la boîte de communication pneumatique (2).

7. Installation de communication pneumatique selon la revendication 6, caractérisée en ce que les axes médians longitudinaux du tube de transport (7), du tube de guidage d'échantillons (3) et de fourchettes semi-circulaires (21, 70) d'un dispositif extracteur de couvercle (23) sont disposés perpendiculairement à la plaque de travail (40) sur un arc de cercle (74) dont le centre se trouve sur l'axe de rotation (48) de l'unité de rotation (6) dont le tronçon de tube de transport (5) présente un axe médian longitudinal qui, lorsque le tronçon de tube de transport (5) est mis en mouvement, se déplace sur le même arc de cercle (74) les axes médians longitudinaux correspondant sensiblement aux positions fixes (13, 71, 72).

8. Installation de communication pneumatique selon une des revendications précédentes, caractérisée en ce que le tube de transport (7) se termine perpendiculairement dans la station terminale de transport pneumatique (1) dans un bloc de chargement (19).

9. Installation de communication pneumatique selon une des revendications précédentes 6 à 8, caractérisée en ce que le tube à air (33) est relié, par un conduit de liaison (42), à la région terminale inférieure du tube de transport (7), le conduit de liaison (42) présentant vers le tube de transport (7) au moins une ouverture de passage d'air (55 ou 56), étant raccordé à une soufflerie (30), et pouvant être obturé par un clapet anti-retour, de préférence un clapet anti-retour assisté par ressort (29).

10. Installation de communication pneumatique selon une des revendications 5 à 9, caractérisée en ce que le tronçon de tube de transport (5) de l'unité de rotation (6) est en liaison avec une étoile de commande (17) montée rotative de la plaque d'entraînement (40), au moins par l'intermédiaire d'un bras pivotant (44 ; 45) monté rotatif, de préférence par l'intermédiaire d'un bras pivotant supérieur et d'un bras pivotant inférieur (44, 45) qui sont maintenus espacés l'un de l'autre par un tronçon de tube (46), et possède de préférence le même diamètre intérieur que le tube de transport (7).

11. Installation de communication pneumatique selon une des revendications 5 à 10, caractérisée en ce que le système cylindre-piston (4, 10, 53) présente dans la position fixe (13) du tube de transport (7), un cylindre de tube de transport (4) qui est fixé par bride, en bas, à la plaque de travail horizontale (40), et dont le piston intérieur est relié, par une tige de piston (53), à un piston extérieur de fermeture (10) qui se prolonge à travers le tronçon de tube de transport (5), jusque dans la région terminale inférieure du tube de transport (7), lorsque le tube de transport (7), le tronçon du tube de transport (5) et le cylindre de tube de transport (4) sont disposés en alignement avec leurs axes parallèles, le tube de transport (7) et le cylindre du tube de transport (4) étant positionnés rigidement l'un par rapport à l'autre.

12. Installation de communication pneumatique selon une des revendications précédentes, caractérisée en ce qu'à l'extérieur de la station terminale de transport pneumatique (1), est prévu un tronçon de tube (8) en forme de T, intercalé dans le tube de transport (7) et muni d'un clapet anti-retour (9) sollicité par ressort, associé à la barre longitudinale du T.

13. Installation de communication pneumatique selon une des revendications précédentes, caractérisée en ce qu'un détecteur de proximité (11), en particulier un interrupteur de proximité, est disposé sur le tube de transport (7) et transmet en retour la position de la boîte de communication pneumatique (2) dans le tube de transport, de sorte que la soufflerie (30) peut être mise en marche ou à l'arrêt, dans un état de production d'air d'aspiration ou d'air comprimé, selon le mode de travail du fonctionnement en navette.

14. Installation de communication pneumatique selon une des revendications 5 à 13, caractérisée en ce que l'unité de rotation (6), dont l'axe de rotation central (48) est situé de préférence excentriquement, sur une des médianes (43), dans la plaque de travail (40), peut être entraînée en rotation, au travers de cette plaque, par un moteur électrique (14) fixé sous la plaque de travail (40).

15. Installation de communication pneumatique selon la revendication 14, caractérisée en ce que l'unité de rotation (6) est essentiellement composée des interrupteurs (17) montés rotatifs, qui peuvent être mis en mouvement par le moteur électrique (14) et de deux bras pivotants (44, 45) dirigés parallèlement, qui sont reliés solidairement en rotation, à distance l'un de l'autre, chacun dans sa région terminale correspondant au point de rotation, par un tronçon de tube (46) monté par brides.

16. Installation de communication pneumatique selon une des revendications 10 à 15, caractérisée en ce que le tronçon de tube de transport (5) est tenu rigidement dans la région terminale libre des bras pivotants (44, 45), de préférence respectivement à ses extrémités inférieure et supérieure respectivement.

17. Installation de communication pneumatique selon une des revendications 10 à 16, caractérisée en ce qu'à l'unité de rotation (6), appartient un disque de commande (15) monté rotatif en dehors de l'axe de rotation (48) de l'étoile de commande (17), et qui possède deux galets de contre-came (16) orientés axialement, espacés sur son diamètre, dans la région marginale, dont toujours au moins un est engagé dans une des douze encoches radiales, marginales (49) de l'étoile de commande (17).

18. Installation de communication pneumatique selon la revendication 17, caractérisée en ce que l'étoile de commande (17) présente sensiblement un disque rotatif possédant de préférence douze encoches (49) en forme de fente, dirigées radialement à l'axe de rotation (48), qui sont arrondies avec une forme convexe en direction de l'axe de rotation (48), et douze éléments rayonnants (50) en forme de rayons, cependant que, dans chacune des deux encoches (49) voisines, un galet de contre-came (16) du disque de commande (15) est engagé en établissant une liaison par complémentarité de forme.

19. Installation de communication pneumatique selon la revendication 18, caractérisée en ce que, sur la plaque de travail (40) sont fixés deux détecteurs de proximité (18, 47), en particulier des déclencheurs de proximité, l'un (18) des détecteurs de proximité, destiné à indiquer la position des éléments rayonnants (50) étant agencé dans la région des éléments rayonnants (50), entre l'étoile de commande (17) et la plaque de travail (40), et l'autre détecteur de proximité (47), destiné à l'indication instantanée de la position de rotation du disque de commande (15), étant agencé dans la région adjacente au disque de commande (15) par rapport à la plaque de travail (40).

20. Installation de communication pneumatique selon la revendication 19, caractérisée en ce que les détecteurs de proximité (18, 47) transmettent à l'unité de commande (25) la position de commande des éléments rayonnants (50) de l'étoile de commande (17), la position de commande de l'étoile de commande (17), qui peut varier à chaque fois d'un angle de 30° ou de plusieurs fois 30°, et avec elle l'emplacement du tronçon de tube de transport (5), avec la boîte de communication pneumatique (2) pouvant être indiqués sur un panneau de service (32) de l'unité de commande et d'alimentation (25).

21. Installation de communication pneumatique selon une des revendications précédentes, caractérisée en ce que la boîte de communication pneumatique (2) qui est transportée pneumatiquement dans le mode navette est réalisée de préférence avec la même forme de construction sur le côté couvercle et sur le côté fond et qu'elle est essentiellement composée d'un couvercle (20), d'un corps central cylindrique creux (60) et d'un fond (59), le corps central (60) présentant un joint (61, 62) vers le couvercle (20) et vers le fond (59) respectivement.

22. Installation de communication pneumatique selon la revendication 21, caractérisée en ce que le couvercle (20) et le fond (59) de la boîte de communication pneumatique (2) sont de préférence de même configuration et possèdent respectivement un rétrécissement radial (63 ou 64) au-dessous d'une plaque de couvercle (65) et au-dessus d'une plaque de fond (66) et le corps central (60) présente respectivement dans la région du fond et dans la région du couvercle des joints annulaires (61, 62) espacés l'un de l'autre, qui s'appuient contre le tube de transport (7) ou contre le tronçon de tube de transport (5) de telle manière que la boîte de communication pneumatique (2) puisse circuler à grande vitesse dans le tube de transport (7) avec un faible jeu en présence d'air d'aspiration ou d'air comprimé engendrés par la soufflerie (30).

23. Installation de communication pneumatique selon une des revendications 21 et/ou 22, caractérisée en ce que les régions de la boîte de communication pneumatique situées au-dessus du joint de couvercle (61) et au-dessous du joint de fond (62) sont un peu plus petites en diamètre de manière que, dans le mode de fonctionnement avec air d'aspiration ou avec air comprimé, les forces nécessaires puissent être exercées sur les joints (62, 61), selon le sens du transport.

24. Installation de communication pneumatique selon une des revendications 21 à 23, caractérisée en ce que le fond (59) de la boîte de communication pneumatique (2) est relié rigidement au corps central (60) et présente une forme différente de celle du couvercle (20), lequel peut se déplacer en translation par rapport au corps central (60).

25. Installation de communication pneumatique selon une des revendications 7 à 24, caractérisée en ce que le dispositif extracteur de couvercle (23) est essentiellement composé d'un support de boîte (22) qui est de préférence fixé à la plaque de travail (40) et d'un cylindre extracteur de couvercle (24) qui est à l'opposé du support de boîte (22) et à distance de ce dernier, dans la direction verticale et qui comporte un piston intérieur prévu et un piston extérieur (68), le cylindre extracteur de couvercle (24) et le support de boîte (22) étant en particulier disposés à un angle de 60° par rapport au tube de transport (7), à l'opposé du tube de guidage d'échantillons (3) dans le sens inverse de celui des aiguilles d'une montre.

26. Installation de communication pneumatique selon la revendication 25, caractérisée en ce que le cylindre extracteur de couvercle (24) possède une tige de piston (57) qui est reliée en bout au piston extérieur, de préférence à un extracteur de couvercle (68) en forme de piston, qui est de préférence composé d'un bras en fourche (69) qui prend la plaque de couvercle (65) par dessous, et d'une fourchette semi-circulaire concave (70) qui s'ajuste dans un étranglement radial (63) du couvercle.

27. Installation de communication pneumatique selon une des revendications 21 à 26, caractérisée en ce que la boîte de communication pneumatique (2) est tenue dans le tronçon de tube de transport (5) de telle manière que le couvercle (20) fasse saillie au-dessus d'un bord supérieur (67) du tronçon de tube de transport (5), de sorte que le couvercle (20) peut être saisi par dessous le dispositif extracteur de couvercle (23).

28. Installation de communication pneumatique selon une des revendications 25 à 27, caractérisée en ce que, dans la position fixe (71), prévue pour l'ouverture/fermeture au niveau du dispositif extracteur de couvercle (23), le support de boîte (22) assure la retenue de la boîte de communication pneumatique (2) dans le tronçon de tube de transport (5), ce support possédant une fourchette semi-circulaire concave (21) en forme de plaque, qui est dimensionnée dans sa forme de plaque de telle manière qu'elle puisse s'ajuster dans une fente de retenue (51) ménagée dans la paroi du tronçon de tube de transport (5) en réponse à une rotation d'un angle d'environ 60° du tronçon de tube de transport (5) dans le sens inverse de celui des aiguilles d'une montre, et qu'elle bloque ainsi la boîte de communication pneumatique (2) dans le tronçon de tube de transport (5).

29. Installation de communication pneumatique selon la revendication 28, caractérisée en ce que la paroi intérieure de la fourchette semi-circulaire concave (21) enserre la paroi extérieure du corps central (60) avec liaison par complémentarité de forme, de préférence au moins sur la moitié, et est appuyée sur le joint de fond (62) en butée sur la largeur, afin que le couvercle (20) puisse être déplacé par rapport au corps central (60) de la boîte de communication pneumatique (2).

30. Installation de communication pneumatique selon une des revendications 6 à 29, caractérisée en ce qu'un appareil de dosage (28), avec lequel la quantité de la matière échantillon peut être chargée dans une mesure prédéterminée, se trouve dans le tube (3) de guidage d'échantillons, qui est disposé de préférence dans une position tournée d'un angle de 60° dans le sens des aiguilles d'une montre par rapport au tube de transport (7), cet appareil étant intercalé en construction en dehors du carter (54), en particulier au-dessus de ce carter.

31. Installation de communication pneumatique selon la revendication 30, caractérisée en ce que l'appareil de dosage (28) est réalisé sous une forme telle qu'après avertissement par signal, il charge la boîte de communication pneumatique (2) avec la quantité voulue de la matière d'échantillon.

32. Installation de communication pneumatique selon une des revendications 6 à 31, caractérisée en ce que le tube de guidage d'échantillons (3) est prolongé à travers la plaque (39) de monture de tubes, sous la forme d'une tubulure de guidage d'échantillons (58), au niveau de laquelle se trouve de préférence une bague d'étanchéité élastique (27) placée en position inférieure.

33. Installation de communication pneumatique selon la revendication 32, caractérisée en ce que, dans la plaque de travail (40), en face et à distance de la tubulure du tube de guidage d'échantillons (58), se trouve, dans la plaque (39) de monture de tubes, un cylindre (26) de tube à échantillons fixé, dont le piston de support d'échantillons (73) peut être engagé dans le tronçon de tube de transport (5) pour donner appui à la boîte de communication pneumatique (2) lorsque le tronçon de tube de transport (5) est amené par pivotement dans la position fixe correspondante (72) prévue pour le chargement/vidage.

34. Installation de communication pneumatique selon une des revendications 32 et/ou 33, caractérisée en ce que l'unité de rotation (6) tourne en partant de la position fixe (71) prévue pour l'ouverture/fermeture du dispositif extracteur de couvercle (23), jusque dans la position fixe (72) prévue pour le chargement/vidage du tube de guidage d'échantillons (3), de préférence d'un angle de 120° dans le sens des aiguilles d'une montre au-dessous de la tubulure (58) du tube de guidage d'échantillons, de sorte que le cylindre à échantillons (26) qui est disposé en face de la tubulure (58) peut déplacer axialement son piston support d'échantillon (73), lequel touche la plaque de fond (66) et presse la boîte de communication pneumatique (2) ouverte, de bas en haut à joint étanche, contre la bague d'étanchéité (27) de la tubulure (58) du tube de guidage d'échantillon.

35. Installation de communication pneumatique selon une des revendications 17 à 34, caractérisée en ce que le moteur électrique (14), qui est en particulier constitué par un moteur-réducteur triphasé, présente une partie formant réducteur (52) qui est relié au disque de commande (15), cependant qu'avec une commutation convenablement commandée du moteur-réducteur triphasé (14), la partie formant réducteur (52) fait tourner le disque de commande (15) dans le sens des aiguilles d'une montre, ou respectivement, dans le sens inverse.
